# EUROPEAN PATENT SPECIFICATION

(11) **EP 4 256 368 B1**
(45) Date of publication and mention of the grant of the patent: **18.02.2026**
(21) Application number: 22748115.7
(22) Date of filing: 23.02.2022
(51) Int. Cl.: G01S 7/48, G01S 7/481, G01S 7/484, G01S 17/18, G01S 17/42, G01S 17/87, G01S 17/89, G01S 17/931, G01S 7/487, G01S 7/4865

(54) **ENHANCEMENT OF LIDAR ROAD DETECTION**
VERBESSERUNG DER LIDAR-STRASSENDETEKTION
AMÉLIORATION DE LA DÉTECTION DE ROUTE PAR LIDAR

(30) Priority: 02.03.2021 US 202163155666 P; 02.02.2022 US 202217591442
(43) Date of publication of application: 11.10.2023
(73) Proprietor: Seyond, Inc., Sunnyvale, CA 94086 (US)
(72) Inventor: ZHOU, Gang, Sunnyvale, CA 94086 (US); WAN, Peng, Sunnyvale, CA 94086 (US); ZHANG, Rui, Palo Alto, CA 94303 (US); DU, Keqiang, San Jose, CA 95123 (US)
(74) Representative: Reddie & Grose LLP
(86) International application number: PCT/US2022/017584
(87) International publication number: WO 2022/187060

(56) References cited:
- DE-A1- 102019 201 739
- US-A1- 2020 158 837
- US-A1- 2020 174 120
- US-A1- 2020 300 984

## Description

### FIELD

This disclosure relates generally to optical scanning and, more particularly, to using a light detection and ranging (LiDAR) system to perform far-distance road detection.

### BACKGROUND

Light detection and ranging (LiDAR) systems use light pulses to create an image or point cloud of the external environment. Some typical LiDAR systems include a light source, a light transmitter, a light steering system, and a light detector. The light source generates a light beam that is directed by the light steering system in particular directions when being transmitted from the LiDAR system. When a transmitted light beam is scattered by an object, a portion of the scattered light returns to the LiDAR system as a return light pulse. The light detector detects the return light pulse. Using the difference between the time that the return light pulse is detected and the time that a corresponding light pulse in the light beam is transmitted, the LiDAR system can determine the distance to the object using the speed of light. The light steering system can direct light beams along different paths to allow the LiDAR system to scan the surrounding environment and produce images or point clouds. LiDAR systems can also use techniques other than time-of-flight and scanning to measure the surrounding environment.

US2020/158837A1 describes that a sensing device includes a first array of sensing elements, which output a signal indicative of a time of incidence of a single photon on the sensing element. A second array of processing circuits are coupled respectively to the sensing elements and comprise a gating generator, which variably sets a start time of the gating interval for each sensing element within each acquisition period, and a memory, which records the time of incidence of the single photon on each sensing element in each acquisition period. US2020/158837A1 also describes a controller sets, in each of at least some of the acquisition periods, different, respective gating intervals for different ones of the sensing elements.

DE102019201739A1 describes a device and a method for time gating in delay-based distance measurement. The device includes a light source, a sensor, a control unit and an evaluation unit. The light source is designed to emit a plurality of light pulses, which are reflected back from the object to the sensor, such that a reflection back of one of the plurality of light pulses on the sensor triggers a photon to strike the sensor. The sensor is designed to generate a received signal within a detection period of the sensor when the photon hits the sensor. The control unit is designed to carry out a plurality of measurements in that the control unit controls the light source for each measurement of the plurality of measurements in such a way that the light source emits a light pulse of the plurality of light pulses at an emission time, and the control unit defines a start time of the detection period of the sensor for each measurement of the plurality of measurements. The evaluation unit is designed to determine a distance between the device and the object depending on the plurality of measurements. Furthermore, the control unit is designed to vary a time difference between the emission time and the start time of the detection period for at least two measurements of the plurality of measurements.

US2020/174120A1 describes a LiDAR (Light Detection and Ranging) system that can include a sensor circuit comprising a controller unit, a transmitter, a gating circuit, and a receiver element, wherein the gating circuit is connected to the controller unit and to the receiver element, wherein signals detected by the sensor circuit correspond to at least one physical object located in an operating region with respect to a location of the sensor circuit and based on multiple measurements. The gating circuit can range-gate the receiver element based on a range-gating waveform, and the controller unit can provide a phase-delay parameter for phase shifting the range-gating waveform with different phase values relative to a light signal transmitted by the transmitter for different measurements by the sensor circuit.

### SUMMARY

A LiDAR system may be used to detect a road surface. When the road surface is located far away from the LiDAR system, the incident light transmitted from the LiDAR system may have a large incident angle with respect to the road surface. As a result, the light energy may spread over the pulse width of a return light pulse. The return light pulse thus becomes elongated in shape and its signal intensity becomes small. Under certain circumstances, the signal intensity of the return light pulse may be so small that it is below the threshold for distinguishing between a signal of a return light pulse and noise. As a result, the return light pulse may not be identified and in turn, this causes difficulty to detect a far-distance road surface.

In various embodiments of the present disclosure, a method for performing far-distance road surface detection is provided. The method uses a sliding time window to integrate data samples of return signals and determines whether the maximum signal intensity represents a return light pulse generated from a far-distance road surface. Using the disclosed method, a return light pulse generated from a far-distance road surface can be sufficiently distinguished from noise, even if the return light pulse has a small signal intensity that is close to that of noise.

According to the invention, a light detection and ranging (LiDAR) system configured for performing far-distance road surface detection is provided. The LiDAR system comprises one or more processors; memory; and one or more programs stored in the memory. The one or more programs include instructions for detecting a return light pulse corresponding to a transmitted light pulse generated by the LiDAR system; determining, based on a signal intensity of the return light pulse being below an intensity threshold, wherein the intensity threshold is configured to distinguish between return pulse signals of a near-distance road surface and noise, that a far-distance road surface detection should be used; obtaining LiDAR detection data samples. The LiDAR detection data samples are associated with the return light pulse having the signal intensity below the intensity threshold. The one or more programs include further instructions for determining, based on a sliding time window, a maximum signal intensity, I_max, associated with the LiDAR detection data samples, comprising: selecting a time width of the sliding time window; and iteratively integrating, based on a starting time position and an ending time position, a plurality of subsets of the LiDAR detection data samples having corresponding time positions within the sliding time window. The one or more programs include further instructions for determining, based on I_max, being greater than a first intensity threshold, I1, wherein I1 is configured to distinguish a return light pulse of a far-distance road surface from noise floor, that the LiDAR detection data samples correspond to a far-distance road surface detection. In accordance with a determination that the LiDAR detection data samples correspond to a far-distance road surface detection, the one or more programs include further instructions for providing far-distance road surface detection data for controlling movement of a vehicle.

According to the invention, a method for performing far-distance road detection using a light detection and ranging (LiDAR) scanning system is provided. The method comprises detecting a return light pulse corresponding to a transmitted light pulse generated by the LiDAR system; determining, based on a signal intensity of the return light pulse being below an intensity threshold, wherein the intensity threshold is configured to distinguish between return pulse signals of a near-distance road surface and noise, that a far-distance road surface detection should be used; obtaining LiDAR detection data samples. The LiDAR detection data samples are associated with the return light pulse having the signal intensity below the intensity threshold. The method further comprises determining, based on a sliding time window, a maximum signal intensity, I_max, associated with the LiDAR detection data samples, comprising: selecting a time width of the sliding time window; and iteratively integrating, based on a starting time position and an ending time position, a plurality of subsets of the LiDAR detection data samples having corresponding time positions within the sliding time window. The method further comprises determining, based on I_max, being greater than a first intensity threshold, I1, wherein I1 is configured to distinguish a return light pulse of a far-distance road surface from noise floor, that the LiDAR detection data samples correspond to a far-distance road surface detection. In accordance with a determination that the LiDAR detection data samples correspond to a far-distance road surface detection, the method further comprises providing far-distance road surface detection data for controlling movement of a vehicle.

According to the invention, a non-transitory computer readable medium is provided. The computer readable medium storing one or more programs comprising instructions, which when executed by one or more processors of an electronic device, cause the electronic device to perform detecting a return light pulse corresponding to a transmitted light pulse generated by the LiDAR system; determining, based on a signal intensity of the return light pulse being below an intensity threshold, wherein the intensity threshold is configured to distinguish between return pulse signals of a near-distance road surface and noise, that a far-distance road surface detection should be used; obtaining LiDAR detection data samples. The LiDAR detection data samples are associated with the return light pulse having the signal intensity below the intensity threshold. The one or more programs comprise further instructions, which cause the electronic device to perform determining, based on a sliding time window, a maximum signal intensity, I_max, associated with the LiDAR detection data samples, comprising: selecting a time width of the sliding time window; and iteratively integrating, based on a starting time position and an ending time position, a plurality of subsets of the LiDAR detection data samples having corresponding time positions within the sliding time window; and determining, based on I_max, being greater than a first intensity threshold, I1, wherein I1 is configured to distinguish a return light pulse of a far-distance road surface from noise floor, that the LiDAR detection data samples correspond to a far-distance road surface detection. In accordance with a determination that the LiDAR detection data samples correspond to a far-distance road surface detection, the one or more programs comprise further instructions, which cause the electronic device to perform providing far-distance road surface detection data for controlling movement of a vehicle.

### BRIEF DESCRIPTION OF THE DRAWINGS

The present application can be best understood by reference to the figures described below taken in conjunction with the accompanying drawing figures, in which like parts may be referred to by like numerals.
FIG. 1 illustrates one or more exemplary LiDAR systems disposed or included in a motor vehicle.
FIG. 2 is a block diagram illustrating interactions between an exemplary LiDAR system and multiple other systems including a vehicle perception and planning system.
FIG. 3 is a block diagram illustrating an exemplary LiDAR system.
FIG. 4 is a block diagram illustrating an exemplary fiber-based laser source.
FIGs. 5A-5C illustrate an exemplary LiDAR system using pulse signals to measure distances to objects disposed in a field-of-view (FOV).
FIG. 6 is a block diagram illustrating an exemplary apparatus used to implement systems, apparatus, and methods in various embodiments.
FIGs. 7A-7C illustrate examples of a LiDAR system transmitting incident light to an object and a near-distance road surface.
FIGs. 8A-8B illustrates an example of a LiDAR system transmitting incident light to a far-distance road surface.
FIG. 9 illustrates differences between a return light pulse from an object or a near-distance road surface and a return light pulse from a far-distance road surface.
FIG. 10 is a flowchart illustrating an exemplary method for performing far-distance road detection using a light detection and ranging (LiDAR) system.
FIG. 11 is a timing diagram for illustrating performing far-distance road surface detection using a sliding time window.
FIG. 12 illustrates threshold distances for determining if far-distance road detection should be used.
FIG. 13 is a flowchart illustrating an exemplary method for controlling vehicle movement using the far-distance road surface detection results.
FIG. 14 is a timing diagram for illustrating obtaining maximum signal intensity for a return light pulse using a sliding time window.

### DETAILED DESCRIPTION

To provide a more thorough understanding of the present invention, the following description sets forth numerous specific details, such as specific configurations, parameters, examples, and the like. It should be recognized, however, that such description is not intended as a limitation on the scope of the present invention but is intended to provide a better description of the exemplary embodiments.

Throughout the specification and claims, the following terms take the meanings explicitly associated herein, unless the context clearly dictates otherwise:

The phrase "in one embodiment" as used herein does not necessarily refer to the same embodiment, though it may. Thus, as described below, various embodiments of the disclosure may be readily combined, without departing from the scope of the claims.

As used herein, the term "or" is an inclusive "or" operator and is equivalent to the term "and/or," unless the context clearly dictates otherwise.

The term "based on" is not exclusive and allows for being based on additional factors not described unless the context clearly dictates otherwise.

As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously. Within the context of a networked environment where two or more components or devices are able to exchange data, the terms "coupled to" and "coupled with" are also used to mean "communicatively coupled with", possibly via one or more intermediary devices.

Although the following description uses terms "first," "second," etc. to describe various elements, these elements should not be limited by the terms. These terms are only used to distinguish one element from another. For example, a first sensor could be termed a second sensor and, similarly, a second sensor could be termed a first sensor, without departing from the scope of the various described examples. The first sensor and the second sensor can both be sensors and, in some cases, can be separate and different sensors.

In addition, throughout the specification, the meaning of "a", "an", and "the" includes plural references, and the meaning of "in" includes "in" and "on".

Although some of the various embodiments presented herein constitute a single combination of inventive elements, it should be appreciated that the inventive subject matter is considered to include all possible combinations of the disclosed elements. As such, if one embodiment comprises elements A, B, and C, and another embodiment comprises elements B and D, then the inventive subject matter is also considered to include other remaining combinations of A, B, C, or D, even if not explicitly discussed herein. Further, the transitional term "comprising" means to have as parts or members, or to be those parts or members. As used herein, the transitional term "comprising" is inclusive or open-ended and does not exclude additional, unrecited elements or method steps.

Throughout the following disclosure, numerous references may be made regarding servers, services, interfaces, engines, modules, clients, peers, portals, platforms, or other systems formed from computing devices. It should be appreciated that the use of such terms is deemed to represent one or more computing devices having at least one processor (e.g., ASIC, FPGA, PLD, DSP, x86, ARM, RISC-V, ColdFire, GPU, multi-core processors, etc.) configured to execute software instructions stored on a computer readable tangible, non-transitory medium (e.g., hard drive, solid state drive, RAM, flash, ROM, etc.). For example, a server can include one or more computers operating as a web server, database server, or other type of computer server in a manner to fulfill described roles, responsibilities, or functions. One should further appreciate the disclosed computer-based algorithms, processes, methods, or other types of instruction sets can be embodied as a computer program product comprising a non-transitory, tangible computer readable medium storing the instructions that cause a processor to execute the disclosed steps. The various servers, systems, databases, or interfaces can exchange data using standardized protocols or algorithms, possibly based on HTTP, HTTPS, AES, public-private key exchanges, web service APIs, known financial transaction protocols, or other electronic information exchanging methods. Data exchanges can be conducted over a packet-switched network, a circuit-switched network, the Internet, LAN, WAN, VPN, or other type of network.

As used in the description herein and throughout the claims that follow, when a system, engine, server, device, module, or other computing element is described as being configured to perform or execute functions on data in a memory, the meaning of "configured to" or "programmed to" is defined as one or more processors or cores of the computing element being programmed by a set of software instructions stored in the memory of the computing element to execute the set of functions on target data or data objects stored in the memory.

It should be noted that any language directed to a computer should be read to include any suitable combination of computing devices or network platforms, including servers, interfaces, systems, databases, agents, peers, engines, controllers, modules, or other types of computing devices operating individually or collectively. One should appreciate the computing devices comprise a processor configured to execute software instructions stored on a tangible, non-transitory computer readable storage medium (e.g., hard drive, FPGA, PLA, solid state drive, RAM, flash, ROM, etc.). The software instructions configure or program the computing device to provide the roles, responsibilities, or other functionality as discussed below with respect to the disclosed apparatus. Further, the disclosed technologies can be embodied as a computer program product that includes a non-transitory computer readable medium storing the software instructions that causes a processor to execute the disclosed steps associated with implementations of computer-based algorithms, processes, methods, or other instructions. In some embodiments, the various servers, systems, databases, or interfaces exchange data using standardized protocols or algorithms, possibly based on HTTP, HTTPS, AES, public-private key exchanges, web service APIs, known financial transaction protocols, or other electronic information exchanging methods. Data exchanges among devices can be conducted over a packet-switched network, the Internet, LAN, WAN, VPN, or other type of packet switched network; a circuit switched network; cell switched network; or other type of network.

A LiDAR system may need to scan objects (e.g., vehicles, bicycles, pedestrians, buildings, trees, etc.) located in a field-of-view (FOV). As described above, a LiDAR system transmits light pulses to the FOV and receives return light pulses. When the LiDAR system transmits a light pulse to an object, the return light pulse typically has its pulse energy concentrated in a small time interval (e.g., a few nanoseconds). When the pulse energy is concentrated in a small time interval, the return light pulse often has a signal shape and/or signal intensity that is easily distinguishable from a noise floor. For example, to distinguish between a return light pulse and the noise floor, an intensity threshold can be configured such that any pulse having a signal intensity above the threshold is identified as a signal, rather than noise.

A LiDAR system may also be used to detect a road surface. When the road surface is located near the LiDAR system, the detection of a return light pulse is similar to that for an object described above. When the road surface is located far away from the LiDAR system, the incident light may have a large incident angle. As a result, for a return light pulse generated from the far-distance road surface, the light energy may spread over its pulse width. The return light pulse thus becomes elongated in shape and its signal intensity becomes small. Under certain circumstances, the signal intensity of the return light pulse may become so small that it is below the intensity threshold that is normally used for distinguishing return light pulses from noise. As such, it becomes difficult to distinguish between a return light pulse and noise.

Embodiments of present disclosure are described below. In various embodiments of the present disclosure, a method for performing far-distance road surface detection is provided. The method uses a sliding time window to integrate data samples of return signals and determines whether the maximum signal intensity represents a return light pulse generated from a far-distance road surface. Using the disclosed method, a return light pulse generated from a far-distance road surface can be sufficiently distinguished from noise, even if the return light pulse has a small signal intensity that is close to that of noise. The effective signal-to-noise ratio is thus increased. As a result, the detection sensitivity of the LiDAR system is improved. The detection accuracy of the system is also enhanced such that signals generated from a far-distance road surface are less likely to be treated as noise, and vice versa. Additionally, using the far-distance road surface detection results, a vehicle can be controlled to more properly respond to the road conditions associated with a far-distance road surface, thereby improving the vehicle's operating safety. Furthermore, using the far-distance road detection data, the LiDAR system can dynamically adjust one or more components to increase the scanning density in a region-of-interest (ROI). Various embodiments of the present disclosure are described below in more detail.

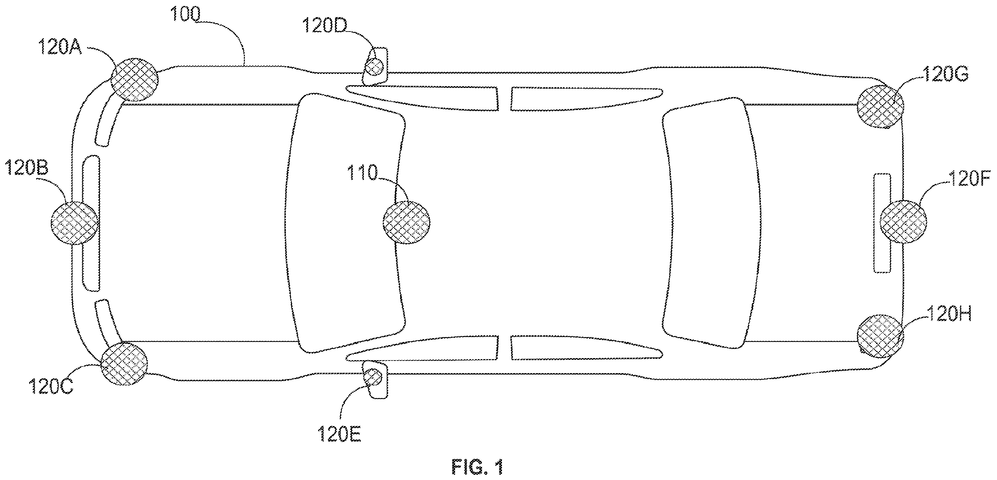

FIG. 1 illustrates one or more exemplary LiDAR systems 110 disposed or included in a motor vehicle 100. Motor vehicle 100 can be a vehicle having any automated level. For example, motor vehicle 100 can be a partially automated vehicle, a highly automated vehicle, a fully automated vehicle, or a driverless vehicle. A partially automated vehicle can perform some driving functions without a human driver's intervention. For example, a partially automated vehicle can perform blind-spot monitoring, lane keeping and/or lane changing operations, automated emergency braking, smart cruising and/or traffic following, or the like. Certain operations of a partially automated vehicle may be limited to specific applications or driving scenarios (e.g., limited to only freeway driving). A highly automated vehicle can generally perform all operations of a partially automated vehicle but with less limitations. A highly automated vehicle can also detect its own limits in operating the vehicle and ask the driver to take over the control of the vehicle when necessary. A fully automated vehicle can perform all vehicle operations without a driver's intervention but can also detect its own limits and ask the driver to take over when necessary. A driverless vehicle can operate on its own without any driver intervention.

In typical configurations, motor vehicle 100 comprises one or more LiDAR systems 110 and 120A-F. Each of LiDAR systems 110 and 120A-F can be a scanning-based LiDAR system and/or a non-scanning LiDAR system (e.g., a flash LiDAR). A scanning-based LiDAR system scans one or more light beams in one or more directions (e.g., horizontal and vertical directions) to detect objects in a field-of-view (FOV). A non-scanning based LiDAR system transmits laser light to illuminate an FOV without scanning. For example, a flash LiDAR is a type of non-scanning based LiDAR system. A flash LiDAR can transmit laser light to simultaneously illuminate an FOV using a single light pulse or light shot.

A LiDAR system is often an essential sensor of a vehicle that is at least partially automated. In one embodiment, as shown in FIG. 1, motor vehicle 100 may include a single LiDAR system 110 (e.g., without LiDAR systems 120A-F) disposed at the highest position of the vehicle (e.g., at the vehicle roof). Disposing LiDAR system 110 at the vehicle roof facilitates a 360-degree scanning around vehicle 100. In some other embodiments, motor vehicle 100 can include multiple LiDAR systems, including two or more of systems 110 and/or 120A-F. As shown in FIG. 1, in one embodiment, multiple LiDAR systems 110 and/or 120A-F are attached to vehicle 100 at different locations of the vehicle. For example, LiDAR system 120A is attached to vehicle 100 at the front right corner; LiDAR system 120B is attached to vehicle 100 at the front center; LiDAR system 120C is attached to vehicle 100 at the front left corner; LiDAR system 120D is attached to vehicle 100 at the right-side rear view mirror; LiDAR system 120E is attached to vehicle 100 at the left-side rear view mirror; and/or LiDAR system 120F is attached to vehicle 100 at the back center. In some embodiments, LiDAR systems 110 and 120A-F are independent LiDAR systems having their own respective laser sources, control electronics, transmitters, receivers, and/or steering mechanisms. In other embodiments, some of LiDAR systems 110 and 120A-F can share one or more components, thereby forming a distributed sensor system. In one example, optical fibers are used to deliver laser light from a centralized laser source to all LiDAR systems. It is understood that one or more LiDAR systems can be distributed and attached to a vehicle in any desired manner and FIG. 1 only illustrates one embodiment. As another example, LiDAR systems 120D and 120E may be attached to the B-pillars of vehicle 100 instead of the rear-view mirrors. As another example, LiDAR system 120B may be attached to the windshield of vehicle 100 instead of the front bumper.

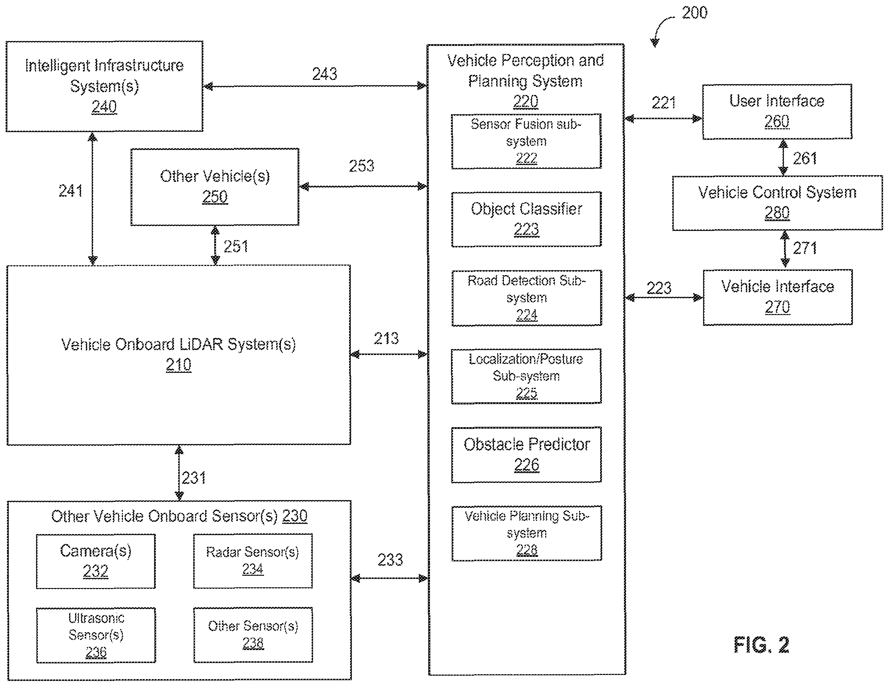

FIG. 2 is a block diagram 200 illustrating interactions between vehicle onboard LiDAR system(s) 210 and multiple other systems including a vehicle perception and planning system 220. LiDAR system(s) 210 can be mounted on or integrated to a vehicle. LiDAR system(s) 210 include sensor(s) that scan laser light to the surrounding environment to measure the distance, angle, and/or velocity of objects. Based on the scattered light that returned to LiDAR system(s) 210, it can generate sensor data (e.g., image data or 3D point cloud data) representing the perceived external environment.

LiDAR system(s) 210 can include one or more of short-range LiDAR sensors, medium-range LiDAR sensors, and long-range LiDAR sensors. A short-range LiDAR sensor measures objects located up to about 20-40 meters from the LiDAR sensor. Short-range LiDAR sensors can be used for, e.g., monitoring nearby moving objects (e.g., pedestrians crossing street in a school zone), parking assistance applications, or the like. A medium-range LiDAR sensor measures objects located up to about 100-150 meters from the LiDAR sensor. Medium-range LiDAR sensors can be used for, e.g., monitoring road intersections, assistance for merging onto or leaving a freeway, or the like. A long-range LiDAR sensor measures objects located up to about 150-300 meters. Long-range LiDAR sensors are typically used when a vehicle is travelling at high speed (e.g., on a freeway), such that the vehicle's control systems may only have a few seconds (e.g., 6-8 seconds) to respond to any situations detected by the LiDAR sensor. As shown in FIG. 2, in one embodiment, the LiDAR sensor data can be provided to vehicle perception and planning system 220 via a communication path 213 for further processing and controlling the vehicle operations. Communication path 213 can be any wired or wireless communication links that can transfer data.

With reference still to FIG. 2, in some embodiments, other vehicle onboard sensor(s) 230 are used to provide additional sensor data separately or together with LiDAR system(s) 210. Other vehicle onboard sensors 230 may include, for example, one or more camera(s) 232, one or more radar(s) 234, one or more ultrasonic sensor(s) 236, and/or other sensor(s) 238. Camera(s) 232 can take images and/or videos of the external environment of a vehicle. Camera(s) 232 can take, for example, high-definition (HD) videos having millions of pixels in each frame. A camera produces monochrome or color images and videos. Color information may be important in interpreting data for some situations (e.g., interpreting images of traffic lights). Color information may not be available from other sensors such as LiDAR or radar sensors. Camera(s) 232 can include one or more of narrow-focus cameras, wider-focus cameras, side-facing cameras, infrared cameras, fisheye cameras, or the like. The image and/or video data generated by camera(s) 232 can also be provided to vehicle perception and planning system 220 via communication path 233 for further processing and controlling the vehicle operations. Communication path 233 can be any wired or wireless communication links that can transfer data.

Other vehicle onboard sensos(s) 230 can also include radar sensor(s) 234. Radar sensor(s) 234 use radio waves to determine the range, angle, and velocity of objects. Radar sensor(s) 234 produce electromagnetic waves in the radio or microwave spectrum. The electromagnetic waves reflect off an object and some of the reflected waves return to the radar sensor, thereby providing information about the object's position and velocity. Radar sensor(s) 234 can include one or more of short-range radar(s), medium-range radar(s), and long-range radar(s). A short-range radar measures objects located at about 0.1-30 meters from the radar. A short-range radar is useful in detecting objects located nearby the vehicle, such as other vehicles, buildings, walls, pedestrians, bicyclists, etc. A short-range radar can be used to detect a blind spot, assist in lane changing, provide rear-end collision warning, assist in parking, provide emergency braking, or the like. A medium-range radar measures objects located at about 30-80 meters from the radar. A long-range radar measures objects located at about 80-200 meters. Medium- and/or long-range radars can be useful in, for example, traffic following, adaptive cruise control, and/or highway automatic braking. Sensor data generated by radar sensor(s) 234 can also be provided to vehicle perception and planning system 220 via communication path 233 for further processing and controlling the vehicle operations.

Other vehicle onboard sensor(s) 230 can also include ultrasonic sensor(s) 236. Ultrasonic sensor(s) 236 use acoustic waves or pulses to measure object located external to a vehicle. The acoustic waves generated by ultrasonic sensor(s) 236 are transmitted to the surrounding environment. At least some of the transmitted waves are reflected off an object and return to the ultrasonic sensor(s) 236. Based on the return signals, a distance of the object can be calculated. Ultrasonic sensor(s) 236 can be useful in, for example, check blind spot, identify parking spots, provide lane changing assistance into traffic, or the like. Sensor data generated by ultrasonic sensor(s) 236 can also be provided to vehicle perception and planning system 220 via communication path 233 for further processing and controlling the vehicle operations.

In some embodiments, one or more other sensor(s) 238 may be attached in a vehicle and may also generate sensor data. Other sensor(s) 238 may include, for example, global positioning systems (GPS), inertial measurement units (IMU), or the like. Sensor data generated by other sensor(s) 238 can also be provided to vehicle perception and planning system 220 via communication path 233 for further processing and controlling the vehicle operations. It is understood that communication path 233 may include one or more communication links to transfer data between the various sensor(s) 230 and vehicle perception and planning system 220.

In some embodiments, as shown in FIG. 2, sensor data from other vehicle onboard sensor(s) 230 can be provided to vehicle onboard LiDAR system(s) 210 via communication path 231. LiDAR system(s) 210 may process the sensor data from other vehicle onboard sensor(s) 230. For example, sensor data from camera(s) 232, radar sensor(s) 234, ultrasonic sensor(s) 236, and/or other sensor(s) 238 may be correlated or fused with sensor data LiDAR system(s) 210, thereby at least partially offloading the sensor fusion process performed by vehicle perception and planning system 220. It is understood that other configurations may also be implemented for transmitting and processing sensor data from the various sensors (e.g., data can be transmitted to a cloud service for processing and then the processing results can be transmitted back to the vehicle perception and planning system 220).

With reference still to FIG. 2, in some embodiments, sensors onboard other vehicle(s) 250 are used to provide additional sensor data separately or together with LiDAR system(s) 210. For example, two or more nearby vehicles may have their own respective LiDAR sensor(s), camera(s), radar sensor(s), ultrasonic sensor(s), etc. Nearby vehicles can communicate and share sensor data with one another. Communications between vehicles are also referred to as V2V (vehicle to vehicle) communications. For example, as shown in FIG. 2, sensor data generated by other vehicle(s) 250 can be communicated to vehicle perception and planning system 220 and/or vehicle onboard LiDAR system(s) 210, via communication path 253 and/or communication path 251, respectively. Communication paths 253 and 251 can be any wired or wireless communication links that can transfer data.

Sharing sensor data facilitates a better perception of the environment external to the vehicles. For instance, a first vehicle may not sense a pedestrian that is a behind a second vehicle but is approaching the first vehicle. The second vehicle may share the sensor data related to this pedestrian with the first vehicle such that the first vehicle can have additional reaction time to avoid collision with the pedestrian. In some embodiments, similar to data generated by sensor(s) 230, data generated by sensors onboard other vehicle(s) 250 may be correlated or fused with sensor data generated by LiDAR system(s) 210, thereby at least partially offloading the sensor fusion process performed by vehicle perception and planning system 220.

In some embodiments, intelligent infrastructure system(s) 240 are used to provide sensor data separately or together with LiDAR system(s) 210. Certain infrastructures may be configured to communicate with a vehicle to convey information and vice versa. Communications between a vehicle and infrastructures are generally referred to as V2I (vehicle to infrastructure) communications. For example, intelligent infrastructure system(s) 240 may include an intelligent traffic light that can convey its status to an approaching vehicle in a message such as "changing to yellow in 5 seconds." Intelligent infrastructure system(s) 240 may also include its own LiDAR system mounted near an intersection such that it can convey traffic monitoring information to a vehicle. For example, a left-turning vehicle at an intersection may not have sufficient sensing capabilities because some of its own sensors may be blocked by traffics in the opposite direction. In such a situation, sensors of intelligent infrastructure system(s) 240 can provide useful, and sometimes vital, data to the left-turning vehicle. Such data may include, for example, traffic conditions, information of objects in the direction the vehicle is turning to, traffic light status and predictions, or the like. These sensor data generated by intelligent infrastructure system(s) 240 can be provided to vehicle perception and planning system 220 and/or vehicle onboard LiDAR system(s) 210, via communication paths 243 and/or 241, respectively. Communication paths 243 and/or 241 can include any wired or wireless communication links that can transfer data. For example, sensor data from intelligent infrastructure system(s) 240 may be transmitted to LiDAR system(s) 210 and correlated or fused with sensor data generated by LiDAR system(s) 210, thereby at least partially offloading the sensor fusion process performed by vehicle perception and planning system 220. V2V and V2I communications described above are examples of vehicle-to-X (V2X) communications, where the "X" represents any other devices, systems, sensors, infrastructure, or the like that can share data with a vehicle.

With reference still to FIG. 2, via various communication paths, vehicle perception and planning system 220 receives sensor data from one or more of LiDAR system(s) 210, other vehicle onboard sensor(s) 230, other vehicle(s) 250, and/or intelligent infrastructure system(s) 240. In some embodiments, different types of sensor data are correlated and/or integrated by a sensor fusion sub-system 222. For example, sensor fusion sub-system 222 can generate a 360-degree model using multiple images or videos captured by multiple cameras disposed at different positions of the vehicle. Sensor fusion sub-system 222 obtains sensor data from different types of sensors and uses the combined data to perceive the environment more accurately. For example, a vehicle onboard camera 232 may not capture a clear image because it is facing the sun or a light source (e.g., another vehicle's headlight during nighttime) directly. A LiDAR system 210 may not be affected as much and therefore sensor fusion sub-system 222 can combine sensor data provided by both camera 232 and LiDAR system 210, and use the sensor data provided by LiDAR system 210 to compensate the unclear image captured by camera 232. As another example, in a rainy or foggy weather, a radar sensor 234 may work better than a camera 232 or a LiDAR system 210. Accordingly, sensor fusion sub-system 222 may use sensor data provided by the radar sensor 234 to compensate the sensor data provided by camera 232 or LiDAR system 210.

In other examples, sensor data generated by other vehicle onboard sensor(s) 230 may have a lower resolution (e.g., radar sensor data) and thus may need to be correlated and confirmed by LiDAR system(s) 210, which usually has a higher resolution. For example, a sewage cover (also referred to as a manhole cover) may be detected by radar sensor 234 as an object towards which a vehicle is approaching. Due to the low-resolution nature of radar sensor 234, vehicle perception and planning system 220 may not be able to determine whether the object is an obstacle that the vehicle needs to avoid. High-resolution sensor data generated by LiDAR system(s) 210 thus can be used to correlated and confirm that the object is a sewage cover and causes no harm to the vehicle.

Vehicle perception and planning system 220 further comprises an object classifier 223. Using raw sensor data and/or correlated/fused data provided by sensor fusion sub-system 222, object classifier 223 can detect and classify the objects and estimate the positions of the objects. In some embodiments, object classifier 233 can use machine-learning based techniques to detect and classify objects. Examples of the machine-learning based techniques include utilizing algorithms such as region-based convolutional neural networks (R-CNN), Fast R-CNN, Faster R-CNN, histogram of oriented gradients (HOG), region-based fully convolutional network (R-FCN), single shot detector (SSD), spatial pyramid pooling (SPP-net), and/or You Only Look Once (Yolo).

Vehicle perception and planning system 220 further comprises a road detection sub-system 224. Road detection sub-system 224 localizes the road and identifies objects and/or markings on the road. For example, based on raw or fused sensor data provided by radar sensor(s) 234, camera(s) 232, and/or LiDAR system(s) 210, road detection sub-system 224 can build a 3D model of the road based on machine-learning techniques (e.g., pattern recognition algorithms for identifying lanes). Using the 3D model of the road, road detection sub-system 224 can identify objects (e.g., obstacles or debris on the road) and/or markings on the road (e.g., lane lines, turning marks, crosswalk marks, or the like).

Vehicle perception and planning system 220 further comprises a localization and vehicle posture sub-system 225. Based on raw or fused sensor data, localization and vehicle posture sub-system 225 can determine position of the vehicle and the vehicle's posture. For example, using sensor data from LiDAR system(s) 210, camera(s) 232, and/or GPS data, localization and vehicle posture sub-system 225 can determine an accurate position of the vehicle on the road and the vehicle's six degrees of freedom (e.g., whether the vehicle is moving forward or backward, up or down, and left or right). In some embodiments, high-definition (HD) maps are used for vehicle localization. HD maps can provide highly detailed, three-dimensional, computerized maps that pinpoint a vehicle's location. For instance, using the HD maps, localization and vehicle posture sub-system 225 can determine precisely the vehicle's current position (e.g., which lane of the road the vehicle is currently in, how close it is to a curb or a sidewalk) and predict vehicle's future positions.

Vehicle perception and planning system 220 further comprises obstacle predictor 226. Objects identified by object classifier 223 can be stationary (e.g., a light pole, a road sign) or dynamic (e.g., a moving pedestrian, bicycle, another car). For moving objects, predicting their moving path or future positions can be important to avoid collision. Obstacle predictor 226 can predict an obstacle trajectory and/or warn the driver or the vehicle planning sub-system 228 about a potential collision. For example, if there is a high likelihood that the obstacle's trajectory intersects with the vehicle's current moving path, obstacle predictor 226 can generate such a warning. Obstacle predictor 226 can use a variety of techniques for making such a prediction. Such techniques include, for example, constant velocity or acceleration models, constant turn rate and velocity/acceleration models, Kalman Filter and Extended Kalman Filter based models, recurrent neural network (RNN) based models, long short-term memory (LSTM) neural network based models, encoder-decoder RNN models, or the like.

With reference still to FIG. 2, in some embodiments, vehicle perception and planning system 220 further comprises vehicle planning sub-system 228. Vehicle planning sub-system 228 can include a route planner, a driving behaviors planner, and a motion planner. The route planner can plan the route of a vehicle based on the vehicle's current location data, target location data, traffic information, etc. The driving behavior planner adjusts the timing and planned movement based on how other objects might move, using the obstacle prediction results provided by obstacle predictor 226. The motion planner determines the specific operations the vehicle needs to follow. The planning results are then communicated to vehicle control system 280 via vehicle interface 270. The communication can be performed through communication paths 223 and 271, which include any wired or wireless communication links that can transfer data.

Vehicle control system 280 controls the vehicle's steering mechanism, throttle, brake, etc., to operate the vehicle according to the planned route and movement. Vehicle perception and planning system 220 may further comprise a user interface 260, which provides a user (e.g., a driver) access to vehicle control system 280 to, for example, override or take over control of the vehicle when necessary. User interface 260 can communicate with vehicle perception and planning system 220, for example, to obtain and display raw or fused sensor data, identified objects, vehicle's location/posture, etc. These displayed data can help a user to better operate the vehicle. User interface 260 can communicate with vehicle perception and planning system 220 and/or vehicle control system 280 via communication paths 221 and 261 respectively, which include any wired or wireless communication links that can transfer data. It is understood that the various systems, sensors, communication links, and interfaces in FIG. 2 can be configured in any desired manner and not limited to the configuration shown in FIG. 2.

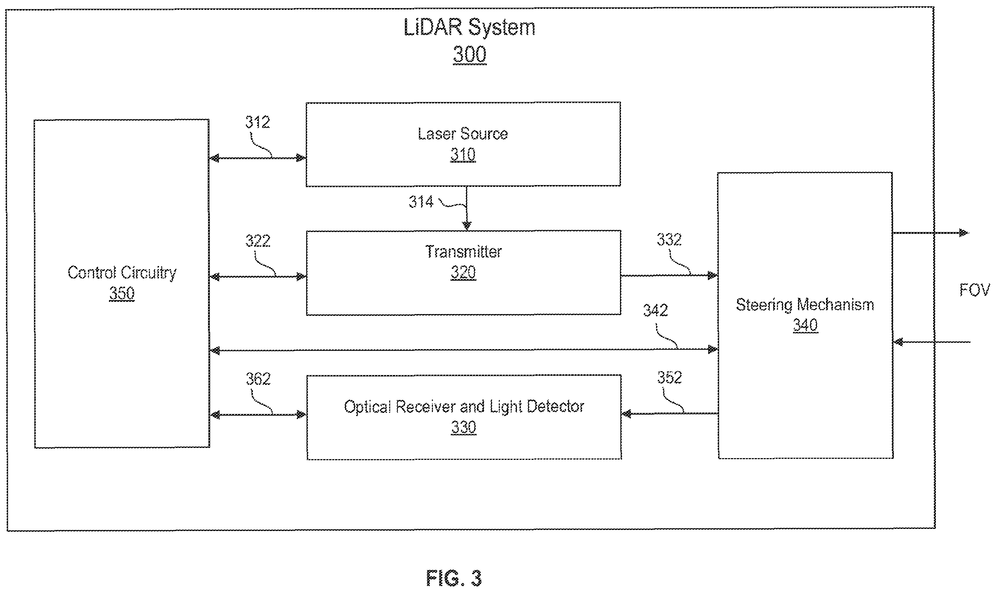

FIG. 3 is a block diagram illustrating an exemplary LiDAR system 300. LiDAR system 300 can be used to implement LiDAR system 110, 120A-F, and/or 210 shown in FIGs. 1 and 2. In one embodiment, LiDAR system 300 comprises a laser source 310, a transmitter 320, an optical receiver and light detector 330, a steering system 340, and a control circuitry 350. These components are coupled together using communications paths 312, 314, 322, 332, 343, 352, and 362. These communications paths include communication links (wired or wireless, bidirectional or unidirectional) among the various LiDAR system components, but need not be physical components themselves. While the communications paths can be implemented by one or more electrical wires, buses, or optical fibers, the communication paths can also be wireless channels or free-space optical paths so that no physical communication medium is present. For example, in one embodiment of LiDAR system 300, communication path 314 between laser source 310 and transmitter 320 may be implemented using one or more optical fibers. Communication paths 332 and 352 may represent optical paths implemented using free space optical components and/or optical fibers. And communication paths 312, 322, 342, and 362 may be implemented using one or more electrical wires that carry electrical signals. The communications paths can also include one or more of the above types of communication mediums (e.g., they can include an optical fiber and a free-space optical component, or include one or more optical fibers and one or more electrical wires).

LiDAR system 300 can also include other components not depicted in FIG. 3, such as power buses, power supplies, LED indicators, switches, etc. Additionally, other communication connections among components may be present, such as a direct connection between light source 310 and optical receiver and light detector 330 to provide a reference signal so that the time from when a light pulse is transmitted until a return light pulse is detected can be accurately measured.

Laser source 310 outputs laser light for illuminating objects in a field of view (FOV). Laser source 310 can be, for example, a semiconductor-based laser (e.g., a diode laser) and/or a fiber-based laser. A semiconductor-based laser can be, for example, an edge emitting laser (EEL), a vertical cavity surface emitting laser (VCSEL), or the like. A fiber-based laser is a laser in which the active gain medium is an optical fiber doped with rare-earth elements such as erbium, ytterbium, neodymium, dysprosium, praseodymium, thulium and/or holmium. In some embodiments, a fiber laser is based on double-clad fibers, in which the gain medium forms the core of the fiber surrounded by two layers of cladding. The double-clad fiber allows the core to be pumped with a high-power beam, thereby enabling the laser source to be a high power fiber laser source.

In some embodiments, laser source 310 comprises a master oscillator (also referred to as a seed laser) and power amplifier (MOPA). The power amplifier amplifies the output power of the seed laser. The power amplifier can be a fiber amplifier, a bulk amplifier, or a semiconductor optical amplifier. The seed laser can be a solid-state bulk laser or a tunable external-cavity diode laser. In some embodiments, laser source 310 can be an optically pumped microchip laser. Microchip lasers are alignment-free monolithic solid-state lasers where the laser crystal is directly contacted with the end mirrors of the laser resonator. A microchip laser is typically pumped with a laser diode (directly or using a fiber) to obtain the desired output power. A microchip laser can be based on neodymium-doped yttrium aluminum garnet (Y₃Al₅O₁₂) laser crystals (i.e., Nd:YAG), or neodymium-doped vanadate (i.e., ND:YVO₄) laser crystals.

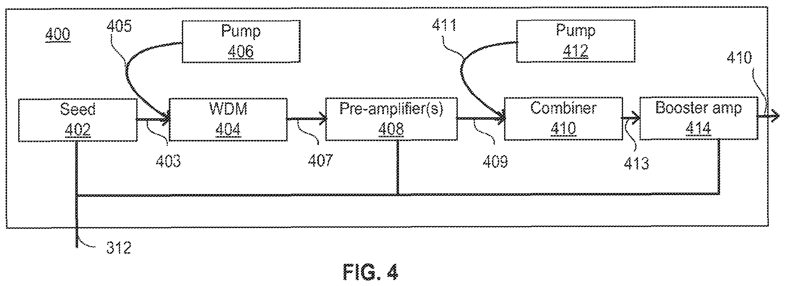

FIG. 4 is a block diagram illustrating an exemplary fiber-based laser source 400 having a seed laser and one or more pumps (e.g., laser diodes) for pumping desired output power. Fiber-based laser source 400 is an example of laser source 310 depicted in FIG. 3. In some embodiments, fiber-based laser source 400 comprises a seed laser 402 to generate initial light pulses of one or more wavelengths (e.g., 1550 nm), which are provided to a wavelength-division multiplexor (WDM) 404 via an optical fiber 403. Fiber-based laser source 400 further comprises a pump 406 for providing laser power (e.g., of a different wavelength, such as 980 nm) to WDM 404 via an optical fiber 405. WDM 404 multiplexes the light pulses provided by seed laser 402 and the laser power provided by pump 406 onto a single optical fiber 407. The output of WDM 404 can then be provided to one or more pre-amplifier(s) 408 via optical fiber 407. Pre-amplifier(s) 408 can be optical amplifier(s) that amplify optical signals (e.g., with about 20-30 dB gain). In some embodiments, pre-amplifier(s) 408 are low noise amplifiers. Pre-amplifier(s) 408 output to a combiner 410 via an optical fiber 409. Combiner 410 combines the output laser light of pre-amplifier(s) 408 with the laser power provided by pump 412 via an optical fiber 411. Combiner 410 can combine optical signals having the same wavelength or different wavelengths. One example of a combiner is a WDM. Combiner 410 provides pulses to a booster amplifier 414, which produces output light pulses via optical fiber 410. The booster amplifier 414 provides further amplification of the optical signals. The outputted light pulses can then be transmitted to transmitter 320 and/or steering mechanism 340 (shown in FIG. 3). It is understood that FIG. 4 illustrates one exemplary configuration of fiber-based laser source 400. Laser source 400 can have many other configurations using different combinations of one or more components shown in FIG. 4 and/or other components not shown in FIG. 4 (e.g., other components such as power supplies, lens, filters, splitters, combiners, etc.).

In some variations, fiber-based laser source 400 can be controlled (e.g., by control circuitry 350) to produce pulses of different signal intensities based on the fiber gain profile of the fiber used in fiber-based laser source 400. Communication path 312 couples fiber-based laser source 400 to control circuitry 350 (shown in FIG. 3) so that components of fiber-based laser source 400 can be controlled by or otherwise communicate with control circuitry 350. Alternatively, fiber-based laser source 400 may include its own dedicated controller. Instead of control circuitry 350 communicating directly with components of fiber-based laser source 400, a dedicated controller of fiber-based laser source 400 communicates with control circuitry 350 and controls and/or communicates with the components of fiber-based light source 400. Fiber-based light source 400 can also include other components not shown, such as one or more power connectors, power supplies, and/or power lines.

Referencing FIG. 3, typical operating wavelengths of laser source 310 comprise, for example, about 850 nm, about 905 nm, about 940 nm, about 1064 nm, and about 1550 nm. The upper limit of maximum usable laser power is set by the U.S. FDA (U.S. Food and Drug Administration) regulations. The optical power limit at 1550 nm wavelength is much higher than those of the other aforementioned wavelengths. Further, at 1550 nm, the optical power loss in a fiber is low. There characteristics of the 1550 nm wavelength make it more beneficial for long-range LiDAR applications. The amount of optical power output from laser source 310 can be characterized by its peak power, average power, and the pulse energy. The peak power is the ratio of pulse energy to the width of the pulse (e.g., full width at half maximum or FWHM). Thus, a smaller pulse width can provide a larger peak power for a fixed amount of pulse energy. A pulse width can be in the range of nanosecond or picosecond. The average power is the product of the energy of the pulse and the pulse repetition rate (PRR). As described in more detail below, the PRR represents the frequency of the pulsed laser light. The PRR typically corresponds to the maximum range that a LiDAR system can measure. Laser source 310 can be configured to produce pulses at high PRR to meet the desired number of data points in a point cloud generated by the LiDAR system. Laser source 310 can also be configured to produce pulses at medium or low PRR to meet the desired maximum detection distance. Wall plug efficiency (WPE) is another factor to evaluate the total power consumption, which may be a key indicator in evaluating the laser efficiency. For example, as shown in FIG. 1, multiple LiDAR systems may be attached to a vehicle, which may be an electrical-powered vehicle or a vehicle otherwise having limited fuel or battery power supply. Therefore, high WPE and intelligent ways to use laser power are often among the important considerations when selecting and configuring laser source 310 and/or designing laser delivery systems for vehicle-mounted LiDAR applications.

It is understood that the above descriptions provide non-limiting examples of a laser source 310. Laser source 310 can be configured to include many other types of light sources (e.g., laser diodes, short-cavity fiber lasers, solid-state lasers, and/or tunable external cavity diode lasers) that are configured to generate one or more light signals at various wavelengths. In some examples, light source 310 comprises amplifiers (e.g., pre-amplifiers and/or booster amplifiers), which can be a doped optical fiber amplifier, a solid-state bulk amplifier, and/or a semiconductor optical amplifier. The amplifiers are configured to receive and amplify light signals with desired gains.

With reference back to FIG. 3, LiDAR system 300 further comprises a transmitter 320. Laser source 310 provides laser light (e.g., in the form of a laser beam) to transmitter 320. The laser light provided by laser source 310 can be amplified laser light with a predetermined or controlled wavelength, pulse repetition rate, and/or power level. Transmitter 320 receives the laser light from laser source 310 and transmits the laser light to steering mechanism 340 with low divergence. In some embodiments, transmitter 320 can include, for example, optical components (e.g., lens, fibers, mirrors, etc.) for transmitting laser beams to a field-of-view (FOV) directly or via steering mechanism 340. While FIG. 3 illustrates transmitter 320 and steering mechanism 340 as separate components, they may be combined or integrated as one system in some embodiments. Steering mechanism 340 is described in more detail below.

Laser beams provided by laser source 310 may diverge as they travel to transmitter 320. Therefore, transmitter 320 often comprises a collimating lens configured to collect the diverging laser beams and produce parallel optical beams with reduced or minimum divergence. The parallel optical beams can then be further directed through various optics such as mirrors and lens. A collimating lens may be, for example, a plano-convex lens. The collimating lens can be configured to have any desired properties such as the beam diameter, divergence, numerical aperture, focal length, or the like. A beam propagation ratio or beam quality factor (also referred to as the M² factor) is used for measurement of laser beam quality. In many LiDAR applications, it is important to control good laser beam quality in generated a transmitting laser beam. The M² factor represents a degree of variation of a beam from an ideal Gaussian beam. Thus, the M² factor reflects how well a collimated laser beam can be focused on a small spot, or how well a divergent laser beam can be collimated. The smaller the M² factor, the tighter the focus of the laser beam and the more intense a beam spot can be obtained. Therefore, laser source 310 and/or transmitter 320 can be configured to obtained desired M² factor according to, for example, a scan resolution requirement.

One or more of the light beams provided by transmitter 320 are scanned by steering mechanism 340 to a FOV. Steering mechanism 340 scans light beams in multiple dimensions (e.g., in both the horizontal and vertical dimension) to facilitate LiDAR system 300 to map the environment by generating a 3D point cloud. Steering mechanism 340 will be described in more detail below. The laser light scanned to an FOV may be scattered or reflected by an object in the FOV. At least a portion of the scattered or reflected light returns to LiDAR system 300. FIG. 3 further illustrates an optical receiver and light detector 330 configured to receive the return light. Optical receiver and light detector 330 comprises an optical receiver that is configured to collect the return light from the FOV. The optical receiver can include optics (e.g., lens, fibers, mirrors, etc.) for receiving, redirecting, focus, amplifying, and/or filtering return light from the FOV. For example, the optical receiver often includes a receiver lens or focusing lens (e.g., a plano-convex lens) to collect and/or focus the collected return light onto a light detector.

A light detector detects the return light focused by the optical receiver and generates current and/or voltage signals proportional to the incident intensity of the return light. Based on such current and/or voltage signals, the depth information of the object in the FOV can be derived. One exemplary method for deriving such depth information is based on the direct TOF (time of flight), which is described in more detail below. A light detector may be characterized by its detection sensitivity, quantum efficiency, detector bandwidth, linearity, signal to noise ratio (SNR), overload resistance, interference immunity, etc. Based on the applications, the light detector can be configured or customized to have any desired characteristics. For example, optical receiver and light detector 330 can be configured such that the light detector has a large dynamic range while having a good linearity. The light detector linearity indicates the detector's capability of maintaining linear relationship between input optical signal power and the detector's output. A detector having good linearity can maintain a linear relationship over a large dynamic input optical signal range.

To achieve desired detector characteristics, configurations or customizations can be made to the light detector's structure and/or the detector's material system. Various detector structure can be used for a light detector. For example, a light detector structure can be a PIN based structure, which has a undoped intrinsic semiconductor region (i.e., an "i" region) between a p-type semiconductor and an n-type semiconductor region. Other light detector structures comprise, for example, a APD (avalanche photodiode) based structure, a PMT (photomultiplier tube) based structure, a SiPM (Silicon photomultiplier) based structure, a SPAD (single-photon avalanche diode) base structure, and/or quantum wires. For material systems used in a light detector, Si, InGaAs, and/or Si/Ge based materials can be used. It is understood that many other detector structures and/or material systems can be used in optical receiver and light detector 330.

A light detector (e.g., an APD based detector) may have an internal gain such that the input signal is amplified when generating an output signal. However, noise may also be amplified due to the light detector's internal gain. Common types of noise include signal shot noise, dark current shot noise, thermal noise, and amplifier noise (TIA). In some embodiments, optical receiver and light detector 330 may include a pre-amplifier that is a low noise amplifier (LNA). In some embodiments, the pre-amplifier may also include a TIA-transimpedance amplifier, which converts a current signal to a voltage signal. For a linear detector system, input equivalent noise or noise equivalent power (NEP) measures how sensitive the light detector is to weak signals. Therefore, they can be used as indicators of the overall system performance. For example, the NEP of a light detector specifies the power of the weakest signal that can be detected and therefore it in turn specifies the maximum range of a LiDAR system. It is understood that various light detector optimization techniques can be used to meet the requirement of LiDAR system 300. Such optimization techniques may include selecting different detector structures, materials, and/or implement signal processing techniques (e.g., filtering, noise reduction, amplification, or the like). For example, in addition to or instead of using direct detection of return signals (e.g., by using TOF), coherent detection can also be used for a light detector. Coherent detection allows for detecting amplitude and phase information of the received light by interfering the received light with a local oscillator. Coherent detection can improve detection sensitivity and noise immunity.

FIG. 3 further illustrates that LiDAR system 300 comprises steering mechanism 340. As described above, steering mechanism 340 directs light beams from transmitter 320 to scan an FOV in multiple dimensions. A steering mechanism is referred to as a raster mechanism or a scanning mechanism. Scanning light beams in multiple directions (e.g., in both the horizontal and vertical directions) facilitates a LiDAR system to map the environment by generating an image or a 3D point cloud. A steering mechanism can be based on mechanical scanning and/or solid-state scanning. Mechanical scanning uses rotating mirrors to steer the laser beam or physically rotate the LiDAR transmitter and receiver (collectively referred to as transceiver) to scan the laser beam. Solid-state scanning directs the laser beam to various positions through the FOV without mechanically moving any macroscopic components such as the transceiver. Solid-state scanning mechanisms include MEMS mirror based steering, optical phased arrays based steering, and flash LiDAR based steering. In some embodiments, because solid-state scanning mechanisms do not physically move macroscopic components, the steering performed by a solid-state scanning mechanism may be referred to as effective steering. A LiDAR system using solid-state scanning may also be referred to as a non-mechanical scanning or simply non-scanning LiDAR system (a flash LiDAR system is an exemplary non-scanning LiDAR system).

Steering mechanism 340 can be used with the transceiver (e.g., transmitter 320 and optical receiver and light detector 330) to scan the FOV for generating an image or a 3D point cloud. As an example, to implement steering mechanism 340, a two-dimensional mechanical scanner can be used with a single-point or several single-point transceivers. A single-point transceiver transmits a single light beam or a small number of light beams (e.g., 2-8 beams) to the steering mechanism. A two-dimensional mechanical steering mechanism comprises, for example, polygon mirror(s), oscillating mirror(s), rotating prism(s), rotating tilt mirror surface(s), or a combination thereof. In some embodiments, steering mechanism 340 may include non-mechanical steering mechanism(s) such as solid-state steering mechanism(s). For example, steering mechanism 340 can be based on tuning wavelength of the laser light combined with refraction effect, and/or based on reconfigurable grating/phase array. In some embodiments, steering mechanism 340 can use a single scanning device to achieve two-dimensional scanning or two devices combined to realize two-dimensional scanning.

As another example, to implement steering mechanism 340, a one-dimensional mechanical scanner can be used with an array or a large number of single-point transceivers. Specifically, the transceiver array can be mounted on a rotating platform to achieve 360-degree horizontal field of view. Alternatively, a static transceiver array can be combined with the one-dimensional mechanical scanner. A one-dimensional mechanical scanner comprises polygon mirror(s), oscillating mirror(s), rotating prism(s), rotating tilt mirror surface(s) for obtaining a forward-looking horizontal field of view. Steering mechanisms using mechanical scanners can provide robustness and reliability in high volume production for automotive applications.

As another example, to implement steering mechanism 340, a two-dimensional transceiver can be used to generate a scan image or a 3D point cloud directly. In some embodiments, a stitching or micro shift method can be used to improve the resolution of the scan image or the field of view being scanned. For example, using a two-dimensional transceiver, signals generated at one direction (e.g., the horizontal direction) and signals generated at the other direction (e.g., the vertical direction) may be integrated, interleaved, and/or matched to generate a higher or full resolution image or 3D point cloud representing the scanned FOV.

Some implementations of steering mechanism 340 comprise one or more optical redirection elements (e.g., mirrors or lens) that steer return light signals (e.g., by rotating, vibrating, or directing) along a receive path to direct the return light signals to optical receiver and light detector 330. The optical redirection elements that direct light signals along the transmitting and receiving paths may be the same components (e.g., shared), separate components (e.g., dedicated), and/or a combination of shared and separate components. This means that in some cases the transmitting and receiving paths are different although they may partially overlap (or in some cases, substantially overlap).

With reference still to FIG. 3, LiDAR system 300 further comprises control circuitry 350. Control circuitry 350 can be configured and/or programmed to control various parts of the LiDAR system 300 and/or to perform signal processing. In a typical system, control circuitry 350 can be configured and/or programmed to perform one or more control operations including, for example, controlling laser source 310 to obtain desired laser pulse timing, repetition rate, and power; controlling steering mechanism 340 (e.g., controlling the speed, direction, and/or other parameters) to scan the FOV and maintain pixel registration/alignment; controlling optical receiver and light detector 330 (e.g., controlling the sensitivity, noise reduction, filtering, and/or other parameters) such that it is an optimal state; and monitoring overall system health/status for functional safety.

Control circuitry 350 can also be configured and/or programmed to perform signal processing to the raw data generated by optical receiver and light detector 330 to derive distance and reflectance information, and perform data packaging and communication to vehicle perception and planning system 220 (shown in FIG. 2). For example, control circuitry 350 determines the time it takes from transmitting a light pulse until a corresponding return light pulse is received; determines when a return light pulse is not received for a transmitted light pulse; determines the direction (e.g., horizontal and/or vertical information) for a transmitted/return light pulse; determines the estimated range in a particular direction; and/or determines any other type of data relevant to LiDAR system 300.

LiDAR system 300 can be disposed in a vehicle, which may operate in many different environments including hot or cold weather, rough road conditions that may cause intense vibration, high or low humidifies, dusty areas, etc. Therefore, in some embodiments, optical and/or electronic components of LiDAR system 300 (e.g., optics in transmitter 320, optical receiver and light detector 330, and steering mechanism 340) are disposed or configured in such a manner to maintain long term mechanical and optical stability. For example, components in LiDAR system 300 may be secured and sealed such that they can operate under all conditions a vehicle may encounter. As an example, an anti-moisture coating and/or hermetic sealing may be applied to optical components of transmitter 320, optical receiver and light detector 330, and steering mechanism 340 (and other components that are susceptible to moisture). As another example, housing(s), enclosure(s), and/or window can be used in LiDAR system 300 for providing desired characteristics such as hardness, ingress protection (IP) rating, self-cleaning capability, resistance to chemical and resistance to impact, or the like. In addition, efficient and economical methodologies for assembling LiDAR system 300 may be used to meet the LiDAR operating requirements while keeping the cost low.

It is understood by a person of ordinary skill in the art that FIG. 3 and the above descriptions are for illustrative purposes only, and a LiDAR system can include other functional units, blocks, or segments, and can include variations or combinations of these above functional units, blocks, or segments. For example, LiDAR system 300 can also include other components not depicted in FIG. 3, such as power buses, power supplies, LED indicators, switches, etc. Additionally, other connections among components may be present, such as a direct connection between light source 310 and optical receiver and light detector 330 so that light detector 330 can accurately measure the time from when light source 310 transmits a light pulse until light detector 330 detects a return light pulse.

These components shown in FIG. 3 are coupled together using communications paths 312, 314, 322, 332, 342, 352, and 362. These communications paths represent communication (bidirectional or unidirectional) among the various LiDAR system components but need not be physical components themselves. While the communications paths can be implemented by one or more electrical wires, busses, or optical fibers, the communication paths can also be wireless channels or open-air optical paths so that no physical communication medium is present. For example, in one exemplary LiDAR system, communication path 314 includes one or more optical fibers; communication path 352 represents an optical path; and communication paths 312, 322, 342, and 362 are all electrical wires that carry electrical signals. The communication paths can also include more than one of the above types of communication mediums (e.g., they can include an optical fiber and an optical path, or one or more optical fibers and one or more electrical wires).

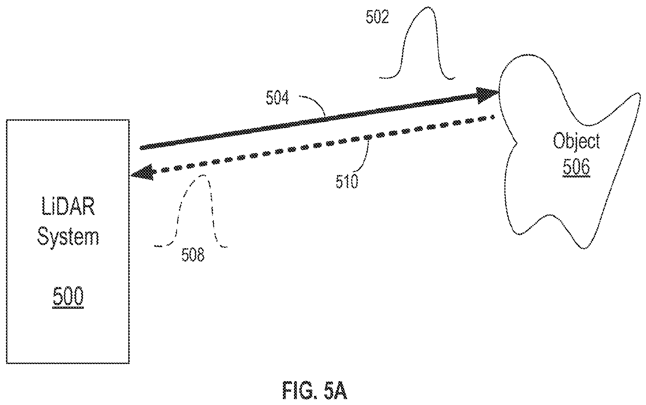

As described above, some LiDAR systems use the time-of-flight (TOF) of light signals (e.g., light pulses) to determine the distance to objects in a light path. For example, with reference to FIG. 5A, an exemplary LiDAR system 500 includes a laser light source (e.g., a fiber laser), a steering system (e.g., a system of one or more moving mirrors), and a light detector (e.g., a photon detector with one or more optics). LiDAR system 500 can be implemented using, for example, LiDAR system 300 described above. LiDAR system 500 transmits a light pulse 502 along light path 504 as determined by the steering system of LiDAR system 500. In the depicted example, light pulse 502, which is generated by the laser light source, is a short pulse of laser light. Further, the signal steering system of the LiDAR system 500 is a pulsed-signal steering system. However, it should be appreciated that LiDAR systems can operate by generating, transmitting, and detecting light signals that are not pulsed and derive ranges to an object in the surrounding environment using techniques other than time-of-flight. For example, some LiDAR systems use frequency modulated continuous waves (i.e., "FMCW"). It should be further appreciated that any of the techniques described herein with respect to time-of-flight based systems that use pulsed signals also may be applicable to LiDAR systems that do not use one or both of these techniques.

Referring back to FIG. 5A (e.g., illustrating a time-of-flight LiDAR system that uses light pulses), when light pulse 502 reaches object 506, light pulse 502 scatters or reflects to generate a return light pulse 508. Return light pulse 508 may return to system 500 along light path 510. The time from when transmitted light pulse 502 leaves LiDAR system 500 to when return light pulse 508 arrives back at LiDAR system 500 can be measured (e.g., by a processor or other electronics, such as control circuitry 350, within the LiDAR system). This time-of-flight combined with the knowledge of the speed of light can be used to determine the range/distance from LiDAR system 500 to the portion of object 506 where light pulse 502 scattered or reflected.

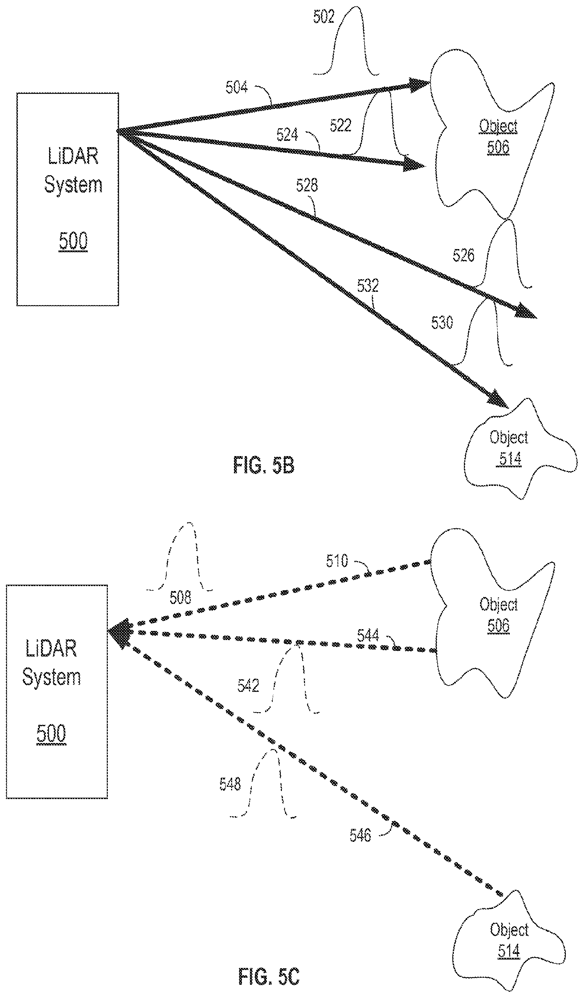

By directing many light pulses, as depicted in FIG. 5B, LiDAR system 500 scans the external environment (e.g., by directing light pulses 502, 522, 526, 530 along light paths 504, 524, 528, 532, respectively). As depicted in FIG. 5C, LiDAR system 500 receives return light pulses 508, 542, 548 (which correspond to transmitted light pulses 502, 522, 530, respectively). Return light pulses 508, 542, and 548 are generated by scattering or reflecting the transmitted light pulses by one of objects 506 and 514. Return light pulses 508, 542, and 548 may return to LiDAR system 500 along light paths 510, 544, and 546, respectively. Based on the direction of the transmitted light pulses (as determined by LiDAR system 500) as well as the calculated range from LiDAR system 500 to the portion of objects that scatter or reflect the light pulses (e.g., the portions of objects 506 and 514), the external environment within the detectable range (e.g., the field of view between path 504 and 532, inclusively) can be precisely mapped or plotted (e.g., by generating a 3D point cloud or images).

If a corresponding light pulse is not received for a particular transmitted light pulse, then it may be determined that there are no objects within a detectable range of LiDAR system 500 (e.g., an object is beyond the maximum scanning distance of LiDAR system 500). For example, in FIG. 5B, light pulse 526 may not have a corresponding return light pulse (as illustrated in FIG. 5C) because light pulse 526 may not produce a scattering event along its transmission path 528 within the predetermined detection range. LiDAR system 500, or an external system in communication with LiDAR system 500 (e.g., a cloud system or service), can interpret the lack of return light pulse as no object being disposed along light path 528 within the detectable range of LiDAR system 500.

In FIG. 5B, light pulses 502, 522, 526, and 530 can be transmitted in any order, serially, in parallel, or based on other timings with respect to each other. Additionally, while FIG. 5B depicts transmitted light pulses as being directed in one dimension or one plane (e.g., the plane of the paper), LiDAR system 500 can also direct transmitted light pulses along other dimension(s) or plane(s). For example, LiDAR system 500 can also direct transmitted light pulses in a dimension or plane that is perpendicular to the dimension or plane shown in FIG. 5B, thereby forming a 2-dimensional transmission of the light pulses. This 2-dimensional transmission of the light pulses can be point-by-point, line-by-line, all at once, or in some other manner. A point cloud or image from a 1-dimensional transmission of light pulses (e.g., a single horizontal line) can generate 2-dimensional data (e.g., (1) data from the horizontal transmission direction and (2) the range or distance to objects). Similarly, a point cloud or image from a 2-dimensional transmission of light pulses can generate 3-dimensional data (e.g., (1) data from the horizontal transmission direction, (2) data from the vertical transmission direction, and (3) the range or distance to objects). In general, a LiDAR system performing an n-dimensional transmission of light pulses generates (*n*+1) dimensional data. This is because the LiDAR system can measure the depth of an object or the range/distance to the object, which provides the extra dimension of data. Therefore, a 2D scanning by a LiDAR system can generate a 3D point cloud for mapping the external environment of the LiDAR system.

The density of a point cloud refers to the number of measurements (data points) per area performed by the LiDAR system. A point cloud density relates to the LiDAR scanning resolution. Typically, a larger point cloud density, and therefore a higher resolution, is desired at least for the region of interest (ROI). The density of points in a point cloud or image generated by a LiDAR system is equal to the number of pulses divided by the field of view. In some embodiments, the field of view can be fixed. Therefore, to increase the density of points generated by one set of transmission-receiving optics (or transceiver optics), the LiDAR system may need to generate a pulse more frequently. In other words, a light source with a higher pulse repetition rate (PRR) is needed. On the other hand, by generating and transmitting pulses more frequently, the farthest distance that the LiDAR system can detect may be limited. For example, if a return signal from a distant object is received after the system transmits the next pulse, the return signals may be detected in a different order than the order in which the corresponding signals are transmitted, thereby causing ambiguity if the system cannot correctly correlate the return signals with the transmitted signals.

To illustrate, consider an exemplary LiDAR system that can transmit laser pulses with a repetition rate between 500 kHz and 1 MHz. Based on the time it takes for a pulse to return to the LiDAR system and to avoid mix-up of return pulses from consecutive pulses in a conventional LiDAR design, the farthest distance the LiDAR system can detect may be 300 meters and 150 meters for 500 kHz and 1 MHz, respectively. The density of points of a LiDAR system with 500 kHz repetition rate is half of that with 1 MHz. Thus, this example demonstrates that, if the system cannot correctly correlate return signals that arrive out of order, increasing the repetition rate from 500 kHz to 1 MHz (and thus improving the density of points of the system) may reduce the detection range of the system. Various techniques are used to mitigate the tradeoff between higher PRR and limited detection range. For example, multiple wavelengths can be used for detecting objects in different ranges. Optical and/or signal processing techniques are also used to correlate between transmitted and return light signals.

Various systems, apparatus, and methods described herein may be implemented using digital circuitry, or using one or more computers using well-known computer processors, memory units, storage devices, computer software, and other components. Typically, a computer includes a processor for executing instructions and one or more memories for storing instructions and data. A computer may also include, or be coupled to, one or more mass storage devices, such as one or more magnetic disks, internal hard disks and removable disks, magneto-optical disks, optical disks, etc.

Various systems, apparatus, and methods described herein may be implemented using computers operating in a client-server relationship. Typically, in such a system, the client computers are located remotely from the server computers and interact via a network. The client-server relationship may be defined and controlled by computer programs running on the respective client and server computers. Examples of client computers can include desktop computers, workstations, portable computers, cellular smartphones, tablets, or other types of computing devices.

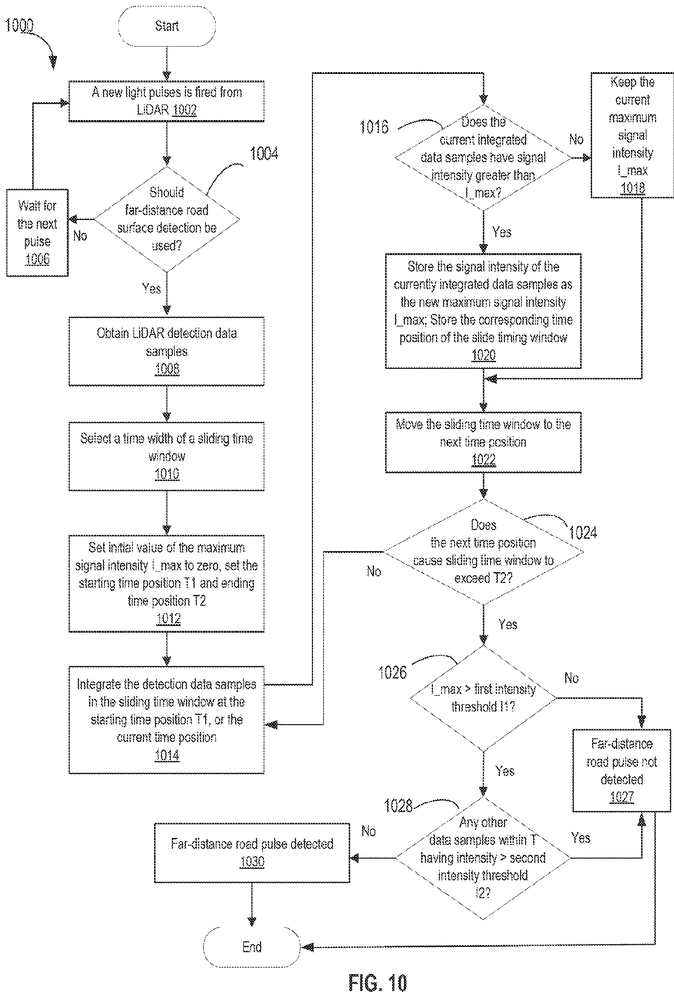

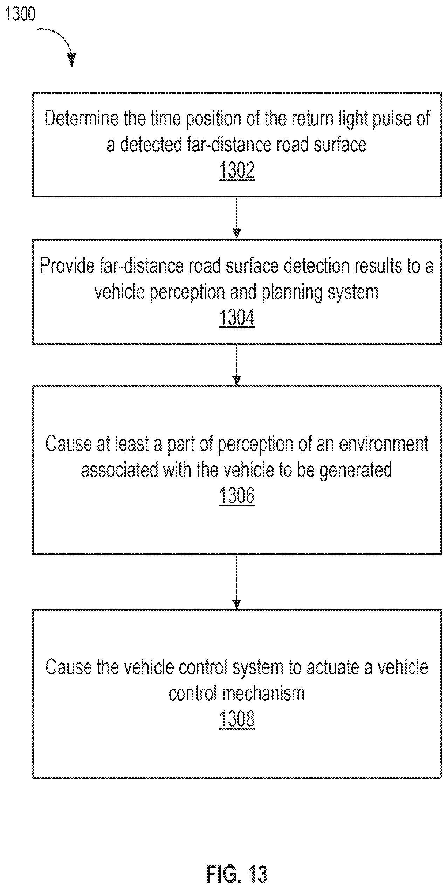

Various systems, apparatus, and methods described herein may be implemented using a computer program product tangibly embodied in an information carrier, e.g., in a non-transitory machine-readable storage device, for execution by a programmable processor; and the method processes and steps described herein, including one or more of the steps of FIGS. 10 and 13, may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

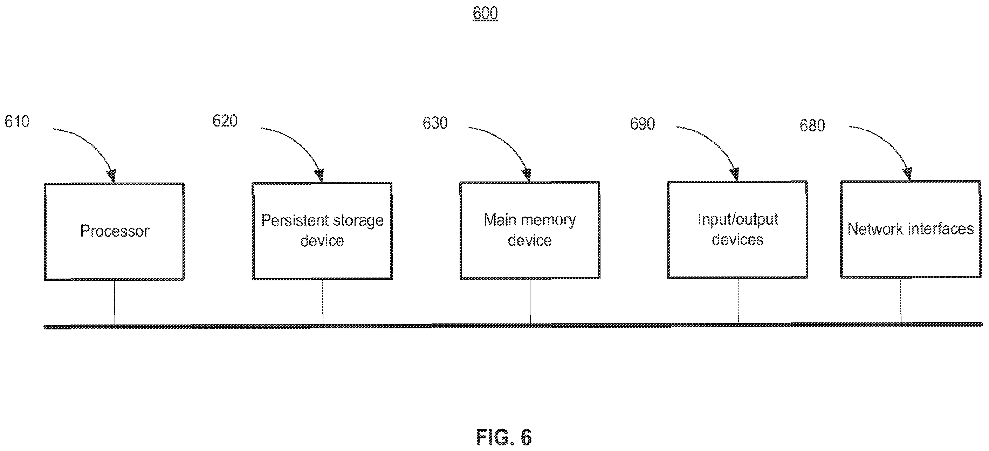

A high-level block diagram of an exemplary apparatus that may be used to implement systems, apparatus and methods described herein is illustrated in FIG. 6. Apparatus 600 comprises a processor 610 operatively coupled to a persistent storage device 620 and a main memory device 630. Processor 610 controls the overall operation of apparatus 600 by executing computer program instructions that define such operations. The computer program instructions may be stored in persistent storage device 620, or other computer-readable medium, and loaded into main memory device 630 when execution of the computer program instructions is desired. For example, processor 610 may be used to implement one or more components and systems described herein, such as control circuitry 350 (shown in FIG. 3), vehicle perception and planning system 220 (shown in FIG. 2), and vehicle control system 280 (shown in FIG. 2). Thus, the method steps of FIGS. 10 and 13 can be defined by the computer program instructions stored in main memory device 630 and/or persistent storage device 620 and controlled by processor 610 executing the computer program instructions. For example, the computer program instructions can be implemented as computer executable code programmed by one skilled in the art to perform an algorithm defined by the method steps of FIGS. 10 and 13. Accordingly, by executing the computer program instructions, the processor 610 executes an algorithm defined by the methods of FIGS. 10 and 13. Apparatus 600 also includes one or more network interfaces 680 for communicating with other devices via a network. Apparatus 600 may also include one or more input/output devices 690 that enable user interaction with apparatus 600 (e.g., display, keyboard, mouse, speakers, buttons, etc.).

Processor 610 may include both general and special purpose microprocessors and may be the sole processor or one of multiple processors of apparatus 600. Processor 610 may comprise one or more central processing units (CPUs), and one or more graphics processing units (GPUs), which, for example, may work separately from and/or multi-task with one or more CPUs to accelerate processing, e.g., for various image processing applications described herein. Processor 610, persistent storage device 620, and/or main memory device 630 may include, be supplemented by, or incorporated in, one or more application-specific integrated circuits (ASICs) and/or one or more field programmable gate arrays (FPGAs).

Persistent storage device 620 and main memory device 630 each comprise a tangible non-transitory computer readable storage medium. Persistent storage device 620, and main memory device 630, may each include high-speed random access memory, such as dynamic random access memory (DRAM), static random access memory (SRAM), double data rate synchronous dynamic random access memory (DDR RAM), or other random access solid state memory devices, and may include non-volatile memory, such as one or more magnetic disk storage devices such as internal hard disks and removable disks, magneto-optical disk storage devices, optical disk storage devices, flash memory devices, semiconductor memory devices, such as erasable programmable read-only memory (EPROM), electrically erasable programmable read-only memory (EEPROM), compact disc read-only memory (CD-ROM), digital versatile disc read-only memory (DVD-ROM) disks, or other non-volatile solid state storage devices.

Input/output devices 690 may include peripherals, such as a printer, scanner, display screen, etc. For example, input/output devices 690 may include a display device such as a cathode ray tube (CRT), plasma or liquid crystal display (LCD) monitor for displaying information to a user, a keyboard, and a pointing device such as a mouse or a trackball by which the user can provide input to apparatus 600.

Any or all of the functions of the systems and apparatuses discussed herein may be performed by processor 610, and/or incorporated in, an apparatus or a system such as LiDAR system 300. Further, LiDAR system 300 and/or apparatus 600 may utilize one or more neural networks or other deep-learning techniques performed by processor 610 or other systems or apparatuses discussed herein.

One skilled in the art will recognize that an implementation of an actual computer or computer system may have other structures and may contain other components as well, and that FIG. 6 is a high-level representation of some of the components of such a computer for illustrative purposes.

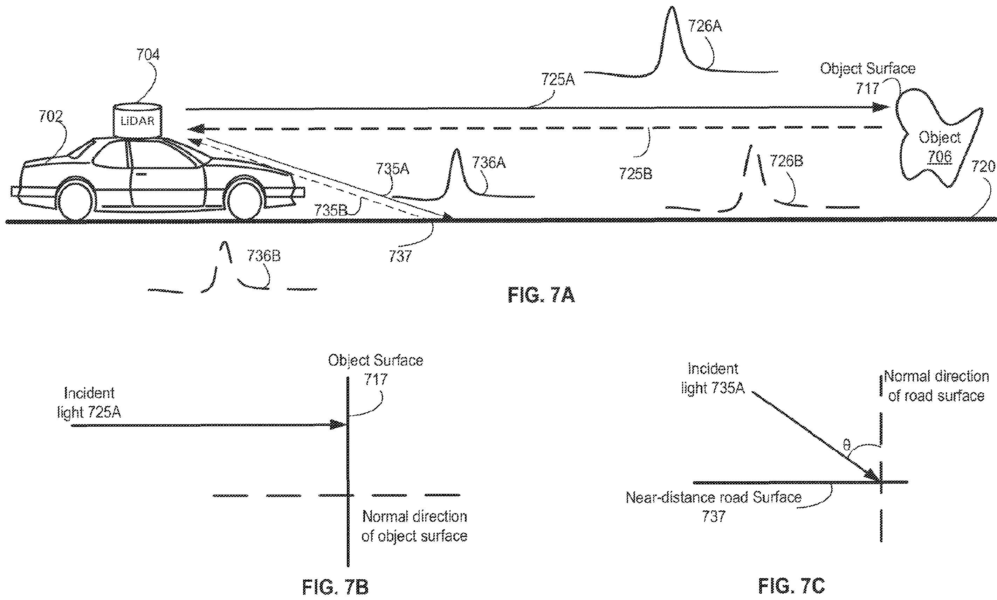

FIGS. 7A-7C illustrate examples of a LiDAR system 704 transmitting incident light to an object 706 and a near-distance road surface 735. As shown in FIG. 7A, a LiDAR system 704 is mounted to, or integrated with, a vehicle 702. Vehicle 702 may be disposed on a road surface 720 (e.g., moving or parking on road surface 720). In FIG. 7A, LiDAR system 704 is illustrated as being disposed on the roof of vehicle 702. It is understood that LiDAR system 704 can also be disposed at any other locations of vehicle 702 (e.g., any locations 120A-H shown in FIG. 1). FIG. 7A illustrates that LiDAR system 704 transmits incident light 725A, which includes one or more light pulses. One such light pulse is illustrated as transmitted light pulse 726A. When incident light 725A reaches an object surface 717 of object 706, at least part of it is scattered or reflected back to LiDAR system 704, thereby forming return light 725B. Return light 725B also includes one or more light pulses. One such light pulse is illustrated as return light pulse 726B. Transmitted light pulse 726A and return light pulse 726B may both have energy concentrated in a small time interval (e.g., a few nanoseconds).

FIG. 7B illustrates that incident light 725A has a zero or small incident angle. An incident angle is the angle between the direction of the incident light and the normal direction of an object or a road surface. For example, in FIG. 7B, incident light 725A is shown as being parallel to the normal direction of object surface 717. Thus, incident light 725A has a zero-incident angle (also referred to as a normal incident angle) with respect to object surface 717. It is understood that incident light 725A may also have a non-zero incidence angle (e.g., 1-10°) with respect to various objects located in the surrounding environment of LiDAR system 704. Typically, the incident angle between the transmitted light and an object surface is a zero-degree angle or a small non-zero degree angle.

In some embodiments, LiDAR system 704 is also configured to detect a near-distance road surface. A near-distance road surface is located close to LiDAR system 704 within a predetermined threshold distance (e.g., 60 meters). FIG. 7A illustrates a near-distance road surface 737. To detect near-distance road surface 737, for example, LiDAR system 704 transmits incident light 735A towards road surface 737. Incident light 735A includes one or more light pulses. One such light pulse is illustrated as transmitted light pulse 736A. When incident light 735A reaches near-distance road surface 737, at least a part of it is scattered or reflected back to LiDAR system 704, thereby forming return light 735B. Return light 735B also includes one or more light pulses. One such light pulse is illustrated in FIG. 7A as return light pulse 736B. Similar to those described above for detecting an object, transmitted light pulse 736A and return light pulse 736B may both have energy concentrated in a small to medium time interval (e.g., a few nanoseconds). FIG. 7C further illustrates that incident light 735A may have a small to medium incident angle. For example, FIG. 7C illustrates one example where incident light 735A has an incident angle *θ* with respect to the normal direction of near-distance road surface 737. The incident angle *θ* for near-distance road surface may be, for example, about 45° (e.g., assuming that LiDAR system 704 is disposed at a height of about 2 meters above the road surface and that the distance between LiDAR system 704 and near-distance road surface 737 is about 2 meters).

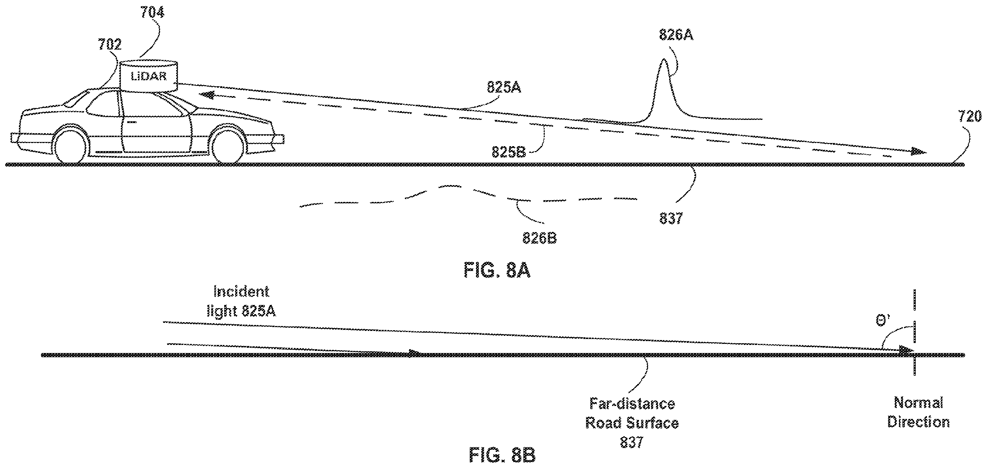

Referencing FIG. 8A, in some embodiments, LiDAR system 704 is also configured to detect a far-distance road surface. FIG. 8A illustrates an example of LiDAR system 704 transmitting incident light to a far-distance road surface 837. A far-distance road surface is located far away from LiDAR system 704 at a distance greater than a predetermined distance threshold (e.g., about 60 meters). To detect far-distance road surface 837, LiDAR system 704 transmits incident light 825A towards far-distance road surface 837. Incident light 825A includes one or more light pulses. One such light pulse is illustrated in FIG. 8A as transmitted light pulse 826A. When incident light 825A reaches far-distance road surface 837, at least part of it is scattered or reflected back to LiDAR system 704, thereby forming return light 825B. Return light 825B also includes one or more light pulses. One such light pulse is illustrated as return light pulse 826B. Unlike those described above for detecting an object or a near-distance road surface, return light pulse 826B may become elongated in pulse width due to the large incident angle of the incident light. Its energy may thus spread across its pulse width. FIG. 8B further illustrates that incident light 825A has a large incident angle. For example, FIG. 8B illustrates one example where incident light 825A has an incident angle *θ*' with respect to the normal direction of far-distance road surface 837. The incident angle *θ*' may be, for example, about 88° (assuming that LiDAR system 704 is disposed at a height of about 2 meters above the road surface and that the distance between LiDAR system 704 and far-distance road surface 837 is about 60 meters).

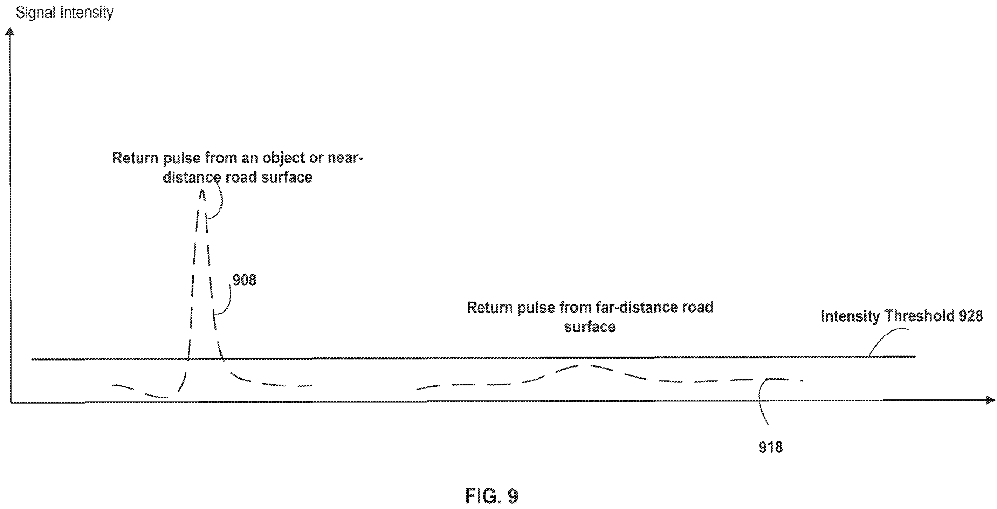

FIG. 9 illustrates differences between a return light pulse generated from an object or a near-distance road surface and a return light pulse generated from a far-distance road surface. Referencing FIG. 9, if the incident light has a small to medium incident angle, a corresponding return light pulse typically has a signal intensity that is above an intensity threshold for distinguishing noise. As a result, they may be easily distinguishable from a noise floor. FIG. 9 illustrates such a return light pulse 908. Return light pulse 908 may be generated from an object or a near-distance road surface using incident light transmitted from a LiDAR system as described above. Return light pulse 908 has its energy concentrated in a small to medium time interval and therefore its signal intensity (e.g., the maximum intensity) is typically above an intensity threshold 928. Intensity threshold 928 may be configured or predetermined to distinguish between return pulse signals and noise.

In contrast, if the incident light has a large incident angle (e.g., close to 90°), a corresponding return light pulse may have a signal intensity that is below an intensity threshold. As a result, the return light pulse may not be easily distinguishable from a noise floor. FIG. 9 illustrates such a return light pulse 918. Return light pulse 918 may be generated by a far-distance road surface using incident light transmitted from a LiDAR system as described above. Return light pulse 918 has its energy spread across its pulse width (e.g., spread across about a 40 ns, assuming the LiDAR system is disposed at a height of about 2 meters above the road surface, and that the far-distance road surface is at a distance of about 80 meters). As a result, its signal intensity (e.g., the maximum signal intensity) is typically below threshold 928. If the signal intensity of return light pulse 918 is below intensity threshold 928, it may be difficult to distinguish return light pulse 918 from noise. In this disclosure, a far-distance road surface is a surface that is located sufficiently away from a LiDAR system such that a return light pulse generated from the far-distance road surface cannot be sufficiently distinguished from a noise floor.

Detecting far-distance road surfaces can be important and sometimes essential for operation of a vehicle. For example, when a motor vehicle is moving at a high speed on a freeway, it is essential to detect the condition of the far-distance road surface (e.g., the road surface located at about 60-150 meters from the vehicle) and control the vehicle accordingly. Typically, a vehicle travelling at a high speed only has a few seconds to respond to the condition of a far-distance road surface. For example, at about 100 meters, the road may have a sharp curve and therefore, the LiDAR system needs to detect that curve and provide the detection data to the vehicle planning and control system so that the vehicle can be controlled to slow down to safely pass the curve. As another example, the road surface located at about 120 meters from the vehicle may have a pit or may be bumpy, the LiDAR system thus needs to detect such road conditions and provide the detection data to the vehicle planning and control system so that the vehicle can respond properly.

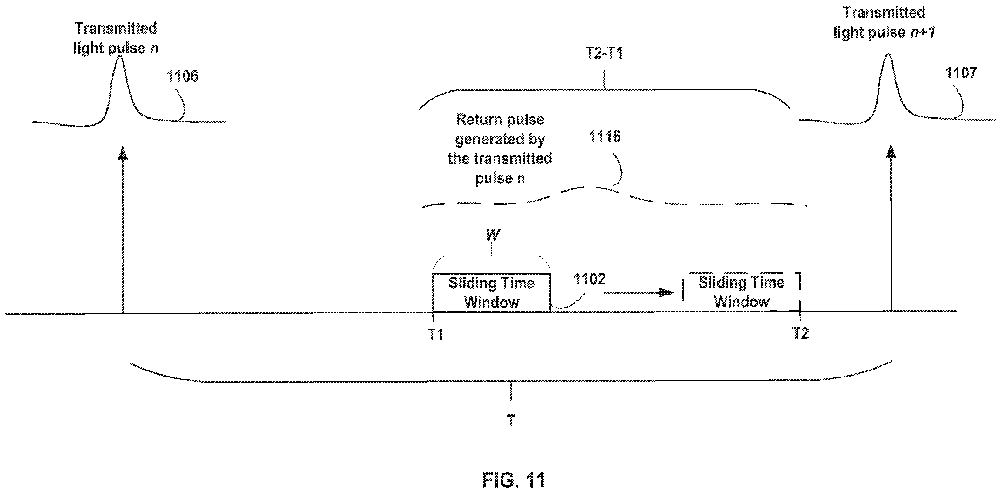

FIG. 10 is a flowchart illustrating an exemplary method 1000 for performing far-distance road detection using a LiDAR system. FIG. 11 illustrates two exemplary consecutive pulses 1106 and 1107 and the timing relation for performing far-distance road detection using a sliding time window. Referencing FIG. 10, in step 1002, a LiDAR system transmits a new light pulse using, e.g., transmitter 320 as shown in FIG. 3. FIG. 11 illustrates such a new light pulse 1106. The new light pulse 1106 may be denoted as the nth transmitted light pulse. The LiDAR system can be configured to transmit a plurality of pulses at a certain frequency or pulse repetition rate (PRR). As shown in FIG. 11, the frequency or the PRR represents the number of light pulses that are transmitted by the LiDAR system per unit time. The frequency or PRR determines the time interval between two consecutive light pulses *"n"* and *"n+1".* As shown in FIG. 11, for example, the time interval T between two consecutive pulses 1106 and 1107 can be calculated using the inverse of the frequency or the PRR.

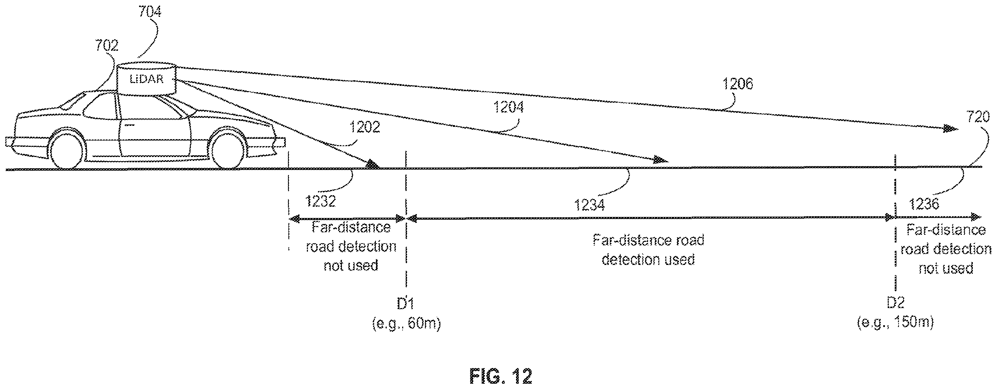

Referencing FIG. 10, step 1004 of method 1000 determines if far-distance road surface detection should be used. If the far-distance road surface detection should be used, method 1000 proceeds to next step 1008. If the far-distance road surface detection should not be used, method 1000 proceeds to step 1006 to wait for the next light pulse to be transmitted and then repeats from step 1002. In some embodiments, the LiDAR system determines if far-distance road surface detection should be used based on one or more threshold distances. Not all light pulses transmitted by a LiDAR system are used to detect far-distance road surfaces. Therefore, the far-distance road surface detection algorithm should not be used for all return light pulses. Referencing FIG. 12, for example, when LiDAR system 704 transmits incident light 1202 to detect a near-distance road surface 1232, the light incident angle has a small or medium value. Therefore, as described above, for detecting a return light pulse corresponding to a transmitted light pulse of incident light 1202, the signal intensity of the return light pulse is compared to an intensity threshold. Because the return light pulse has a signal intensity that is sufficiently above the intensity threshold, the return light pulse can be sufficiently distinguished from the noise floor. In other words, the return light pulse has a good signal-to-noise ratio. As such, LiDAR system 704 determines that far-distance road surface detection should not be used. As illustrated in FIG. 12, in general, within a threshold distance D1, the light incident angle has a small or medium value and therefore, far-distance road surface detection should not be used.

At or beyond the threshold distance D1 from LiDAR system 704, the incident angle of the incident light becomes large. As such, the corresponding return light pulse may not be sufficiently distinguished from the noise floor. Thus, to detect such return light pulses, LiDAR system 704 determines that far-distance road detection should be used. The threshold distance D1 is also referred to as the first threshold distance. The threshold distance D1 can be determined based on previously-received return light pulses and an intensity threshold. For example, LiDAR system 704 may transmits a plurality of light pulses at different directions or incident angles to different portions of road surfaces 720. LiDAR system 704 receives the corresponding return light pulses for these transmitted light pulses. The signal intensities of these return light pulses are compared to an intensity threshold used to distinguish from the noise floor. When one or more return light pulses cannot be sufficiently distinguished from the noise floor, the corresponding one or more transmitted light pulses can be used to determine the threshold distance D1. The threshold distance D1 can also be similarly determined using computer simulations. In one example, the threshold distance D1 is determined to be about 60 meters.

Referencing still to FIG. 12, LiDAR system 704 transmits light 1204 to detect a far-distance road surface 1234. Because far-distance road surface 1234 is located at a distance equal to or greater than threshold distance D1, LiDAR system 704 determines that far-distance detection should be used. As illustrated in FIG. 12, at a distance greater than another threshold distance D2 from LiDAR system 704, LiDAR system 704 is approaching or at its maximum detection limit. Objects and/or road surfaces beyond threshold distance D2 may not be detectable or may not needed to be detected. Therefore, LiDAR system 704 determines that far-distance road surface detection should not be used for road surfaces located at a distance equal to or greater than threshold distance D2. Threshold distance D2 is also referred to as the second threshold distance, which in one example is about 150 meters. The threshold distance D2 can be determined by using the LiDAR system's design specification, simulations, and/or past experimental data.

In some embodiments, LiDAR system 704 can determine if far-distance road detection should be used based on both the threshold distance D1 and the threshold distance D2. For example, if any transmitted light pulses are for detecting road surfaces located between the threshold distance D1 and the threshold distance D2, LiDAR system 704 determines that far-distance road detection should be used. The threshold distance D1 and threshold distance D2 can be used to compute the corresponding LiDAR system parameters such as transmitting light angles, rotation/oscillation speeds of optical components (e.g., the polygon mirror and/or the Galvanometer mirror), or the like. In turn, such LiDAR system parameters can be used by the LiDAR system's control circuitry to determine if far-distance road detection should be used for any particular return light pulse. For example, when processing a return light pulse corresponding to a road surface located within the threshold distance D1 or a road surface located beyond the threshold distance D2, the LiDAR system may disable or simply not use the far-distance road detection. Otherwise, the LiDAR system may enable or use the far-distance road detection for processing a return light pulse.

Referencing back to FIG. 10, if step 1004 determines that far-distance road detection should be used, method 1000 proceeds to step 1008, which obtains LiDAR detection data samples associated with a return light pulse. FIG. 11 illustrates such a return light pulse 1116. Return light pulse 1116 may be received by a receiver (e.g., optical receiver and light detector 330 shown in FIG. 3) of a LiDAR system. In the example illustrated in FIG. 11, return light pulse 1116 is generated when a far-distance road surface scatters or reflects at least a portion of a current transmitted light pulse 1106. Transmitted light pulse 1106 is also denoted by transmitted light pulse *n,* where *"n"* is an integer number that is greater than or equal to one. As described above, if return light pulse 1116 is generated from a far-distance road surface, such a return light pulse may have small maximum intensity with energy spread over its pulse width. Return light pulse 1116 may not be sufficiently distinguishable from the noise floor. Thus, far-distance road surface detection should be used to detect return light pulse 1116.

In some embodiments, as shown in FIG. 11, the far-distance road surface detection is used between a starting time position T1 and an ending time position T2. The starting time position T1 and the ending time position T2 are within a time interval between time positions associated with the two consecutively transmitted light pulses 1106 and 1107. The starting time position T1 and ending time position T2 can be preconfigured or dynamically adjusted based on one or more of the time that light pulse 1106 is transmitted, the time that return light pulse 1116 is received, and/or other factors. As one example, the starting time position T1 can be determined using the sum of the time that light pulse 1106 is transmitted and a round-trip time-of-flight. The round-trip time-of-flight may be predetermined or dynamically determined based on the time that return light pulse 1116 is received. The round-trip time-of-flight may also be determined using a return light pulse that has a signal intensity slightly above the intensity threshold for distinguishing a signal pulse from the noise floor. For example, the starting time position T1 may be determined using a return light pulse generated from an object or a road surface located at the threshold distance D1 (e.g., at about 60 meters). The ending time position T2 may also be predetermined or dynamically adjusted. For example, a time offset may be applied in computing the starting time position T1 and ending time position T2 such that they account for the entire or a substantial portion (e.g., 90%) of the pulse width of return light pulse 1116. The ending time position T2 can also be determined by a time offset that results in the time interval T2-T1 being much greater than the typical pulse width of return light pulse 1116. For example, the ending time position T2 can be determined using a time offset corresponding to twice of the threshold distance D1 (e.g., a time offset corresponding to an object or a road surface located at about 120 meters). In one embodiment, if the starting time position T1 corresponds to a return light pulse generated from an object or a road surface located at about 60 meters and the time offset corresponds to an object or a road surface located at about 120 meters, the time interval between the ending time position T2 and starting time position T1 is determined to be about 400ns. In other embodiments, the ending time position T2 can be near or at the time of the next transmitted light pulse (e.g., light pulse *n+*1)*.* In some embodiments, to reduce noise or the reduce the possibility of erroneously treating noise as a return light pulse, the time interval between the ending time position T2 and starting time position T1 is limited, such that it is sufficient to account for the entire pulse width of the return light pulse but not being excessively large (e.g., the ending time position T2 may be extended to the starting time position of the next transmitted pulse *n+*1)*.* In some embodiments, the starting time position T1 and ending time position T2 can be adjusted for each return light pulse to account for variations of pulse widths.

In some embodiments, a LiDAR system comprises one or more analog-to-digital converters (ADC) configured to sample a return signal corresponding to a current transmitted light pulse within a starting time position T1 and an ending time position T2 to obtain the LiDAR detection data samples. An ADC can be included in, for example, control circuitry 350 shown in FIG. 3. The return signal is an electrical signal that represents a return light pulse such as light pulse 1116. An ADC samples analog electrical signals provided by a light detector and generates digital signals representing sampled discrete levels of the analog electrical signals. The digital signals can thus be processed using various digital signal processing techniques, including integration, summing, filtering, etc.

Referencing FIG. 10, in some embodiments, before processing the data samples, step 1010 of method 1000 selects a time width of a sliding time window. An example sliding time window 1102 is shown in FIG. 11. Sliding time window 1102 has a width denoted by "*W*'. The width of sliding time window 1102 can be predetermined or adjusted dynamically for different return light pulses. For example, for a return light pulse that has a smaller width, a correspondingly smaller window width may be used, and vice versa. The width of the sliding time window can also be configured to be any desired value. For example, to perform a faster but less accurate analysis of the return light pulse, a larger window width may be used. To perform a slower but more accurate analysis of the return light pulse, a smaller window width may be used. In one example, the window width of sliding time window 1102 may be 20-100 ns.

Referencing FIGs. 10 and 11, step 1012 of method 1000 sets the initial value of a maximum signal intensity (denoted by *I_max*) of a return signal representing the return light pulse to zero. The value of the maximum signal intensity is updated subsequently as the data samples are being integrated using the sliding time window, as described in more detail below. In some embodiments, step 1012 also sets the starting time position T1 and the ending time position T2 based on the determined values of the time positions T1 and T2.

Using the sliding time window 1102, subsets of the LiDAR detection data samples associated with return light pulse 1116 can be analyzed between the starting time position T1 and the ending time position T2. In one embodiment, the analysis of return light pulse 1116 is performed by iteratively integrating, from the starting time position T1 to the ending time position T2, the LiDAR detection data samples that have corresponding time positions within the selected time width of sliding time window 1102. As illustrated in FIGs. 10 and 11, step 1014 of method 1000 integrates of a first subset of the LiDAR detection data samples that have time positions within sliding time window 1102 and have a beginning time position at the starting time position T1. The integration result is the sum of the first subset of the LiDAR detection data samples and is also referred to as the signal intensity of the first subset of the LiDAR detection data samples. The signal intensity of the first subset is stored and compared to the current maximum signal intensity I_max. Step 1016 determines if this signal intensity is greater than the current maximum signal intensity I_max. In this case, the signal intensity of the first subset of the LiDAR detection data samples is greater than the initial value of I_max, which is zero. In other words, the determination of step 1016 is "yes". Method 1000 then proceeds to step 1020. In step 1020, the signal intensity of the first subset of the LiDAR detection samples is stored as the new maximum signal intensity I_max. The corresponding time position of the slide timing window 1102 is also stored.

Next, method 1000 proceeds to step 1022, which moves sliding timing window 1102 to the next time position. The next time position may be denoted as T1+Δ*t,* where Δ*t* is a timing step used in the data sampling of the return signals. Step 1024 then determines whether the next time position causes sliding time window 1102 to exceed the ending time position T2. For example, step 1024 determines if the right edge of sliding timing window 1102 exceeds the ending time position T2. If not, method 1000 goes back to step 1014 to integrate a second subset of the LiDAR detection data samples having corresponding time positions within sliding time window 1102 at the time position T1+Δ*t.* The result of the integration is represented as the signal intensity of the second subset of the LiDAR detection data samples. In some embodiments, the second subset and the first subset have overlapping data samples.

Next, method 1000 repeats step 1016 to determine if the signal intensity of the second subset is greater than the current maximum signal intensity I_max. In this case, the current maximum signal intensity I_max is the signal intensity of the first subset of the LiDAR detection data samples. If the determination of step 1016 is "yes" (i.e., the signal intensity of the second subset is greater than the signal intensity of the first subset), method 1000 proceeds to step 1020. In step 1020, this signal intensity of the second subset of the LiDAR detection samples is stored as the new maximum signal intensity I_max. The corresponding time position of slide timing window 1102 (e.g., T1+Δ*t*) is also stored. If the determination of step 1016 is "no" (i.e., the signal intensity of the second subset is less than or equal to the signal intensity of the first subset), method 1000 proceeds to step 1018. Step 1018 keeps the current maximum signal intensity I_max.

Next, method 1000 proceeds to step 1022, which moves sliding time window 1102 to the next time position. The next time position may be at T1+2Δ*t.* Step 1024 then determines whether the next time position T1+2Δ*t* causes sliding time window 1102 to exceed the ending time position T2. If not, method 1000 then again proceeds to step 1014 to integrate the third subset of the LiDAR detection data sample. Steps 1014, 1016, 1018, 1020, 1022, and 1024 are then repeated iteratively to integrate a fourth subset of the LiDAR detection data sample, a fifth subset, a sixth subset, and so forth. In each iteration, if the signal intensity of a particular subset is greater than the stored current maximum signal intensity I_max, the signal intensity of the particular subset is stored as the new maximum signal intensity. The corresponding time position of slide time window 1102 is also stored. If the signal intensity of a particular subset is equal to or less than the stored current maximum signal intensity I_max, the current maximum signal intensity and the current time position of sliding time window 1102 are both unchanged. Accordingly, at the end of the iteration, the stored current maximum signal intensity represents the highest signal intensity among all the subsets of the LiDAR detection data samples. And the stored time position of sliding time window 1102 is the time position of the particular subset that generates the highest signal intensity.

In the above description, the sliding time window is a rectangle window. It is understood that other types of windows may also be used, including Bartlett window, Blackman window, Dolph-Shebyshev window, Hamming window, Hanning window, Kaiser window, etc. Further, the data samples described above are the in the time domain. It is understood that the data samples may also be represented in frequency domain and processed accordingly.

Referencing FIGs. 10 and 11, if the determination in step 1024 is "yes" (i.e., if the next time position causes the sliding time window 1102 to exceed the ending time position T2), it means all subsets of LiDAR detection data samples located within the starting time position T1 and the ending time position T2 have been analyzed. As such, method 1000 proceeds to step 1026 to determine whether the maximum signal intensity I_max is greater than a first intensity threshold I1. The first intensity threshold I1 is configured to distinguish a possible return light pulse of a far-distance road surface from noise floor. For example, if the LiDAR detection data samples correspond to just noise, it is likely that the value of the maximum signal intensity I_max is close to zero because noise tend to cancel each other when they are integrated in a time window. In contrast, if the LiDAR detection data samples correspond to a return light pulse of a far-distance road surface, it is likely that the value of the maximum signal intensity I_max is sufficiently above zero. This is because a certain subset of the data samples corresponding to a return light pulse of a far-distance road surface likely have mostly positive signal values. Thus, the integration of the subset using a sliding time window generates a signal intensity that is sufficiently larger than the sum of just noise. In some embodiments, the first intensity threshold I1 is determined using the time width of the sliding time window and a sample noise floor. For example, based on simulation and/or experimental data, integration of data samples corresponding to known return light pulses of far-distance road surfaces can be computed and/or simulated using a sliding time window having a given time width. Integration of known noise using the same sliding time window can also be computed and/or simulated. The first intensity threshold I1 can be configured to be any desired value below the integration of the data samples corresponding to known return light pulses of far-distance road surfaces but above the integration of known noise.

In FIG. 10, if the answer in step 1026 is "no" (i.e., the current maximum signal intensity I_max is less than or equal to the first intensity threshold I1), method 1000 determines that the LiDAR detection data samples under analysis likely do not correspond to a return light pulse of a far-distance road surface. In other words, the LiDAR detection data samples probably correspond to only noise. Method 1000 thus ends for the current transmitted light pulse.

If the answer in step 1026 is "yes" (i.e., the current maximum signal intensity I_max is greater than the first intensity threshold I1), the LiDAR detection data samples under analysis correspond to a possible return light pulse generated from a far-distance road surface. Method 1000 thus proceeds to step 1028 to make further determinations. Specifically, step 1028 determines if there are any additional LiDAR detection data samples associated with signal intensities above a second intensity threshold I2. The additional LiDAR detection data samples correspond to other possible return signals (not shown) that are also received during the time interval T between the two consecutive transmitted light pulses 1106 and 1107. For example, if there is a non-road surface object (e.g., a debris, a construction zone warning cone, a vehicle that is positioned in front of the LiDAR system, etc.) located in the light path of a transmitted light pulse for detecting far-distance road surface, the object may also generate a return light pulse. The LiDAR system receiver receives the return light pulse from the non-road surface object. The return light pulse generated by the non-road surface object may have an intensity that is larger than the second intensity threshold I2, which indicates that the return light pulse isn't generated from a far-distance road surface. In this case, the far-distance road surface is not detected. In some embodiments, the second intensity threshold I2 is also determined based on simulation and/or experimental data for a non-road surface object. Integrations of data samples correspond to return light pulses of known non-road surface objects can be computed and/or simulated. The second intensity threshold I2 can then be determined based on a minimum intensity of return light pulses of known objects and optionally a multiplier. In some embodiments, the second intensity threshold I2 can be configured to be any desired value using the product of the multiplier and the minimum intensity of return light pulses of known non-road surface objects. The second intensity threshold I2 is greater than the first intensity threshold I1.

Referencing FIG. 10, if step 1028 determines that there are no additional LiDAR detection data samples, or if there are additional LiDAR detection data samples but their intensities are not above the second intensity threshold I2, method 1000 determines that the LiDAR detection data samples likely correspond to a return light pulse generated from a far-distance road surface. Thus, a far-distance road surface is detected. Thereafter, method 1000 proceeds to an end for the current transmitted light pulse. Method 1000 can be repeated for any number of transmitted light pulses. It is understood that the steps in method 1000 are for illustration. These steps can be modified, re-ordered, deleted in any desired manner. Additional steps may also be added to method 1000. Using method 1000, a return light pulse generated from a far-distance road surface can be sufficiently distinguished from noise. The effective signal-to-noise ratio is increased. As a result, the detection sensitivity of the LiDAR system is improved. The detection accuracy of the system is also enhanced such that signals generated from a far-distance road surface are less likely to be treated as noise, and vice versa.

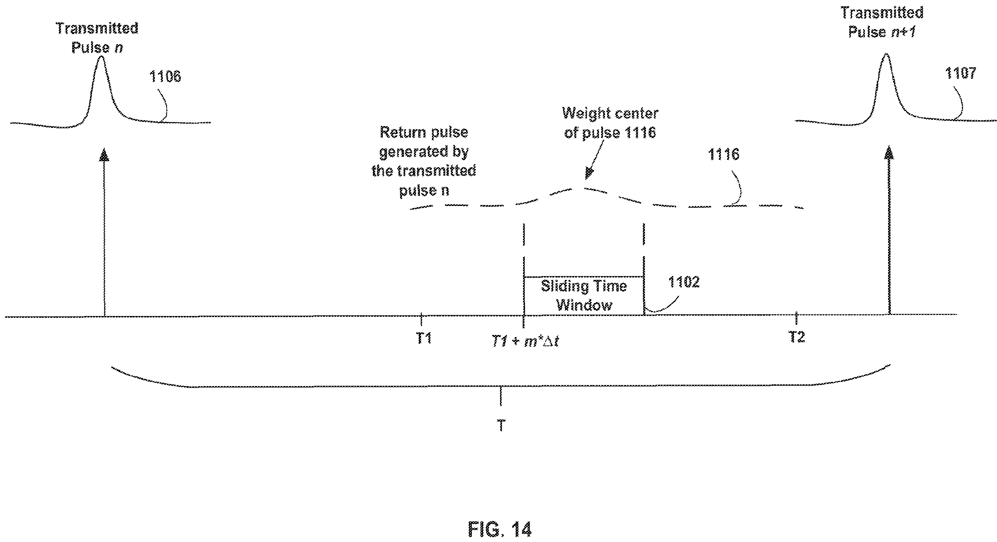

In some embodiments, after the LiDAR system determines that there is likely a far-distance road detection, the detection results can be used to compute the position of the far-distance road surface and/or provided for controlling movement of the vehicle. FIG. 13 illustrates a method 1300 for controlling a vehicle using the far-distance road detection results. Referencing FIGs. 13 and 14, step 1302 determines a time position of a return light pulse (e.g., pulse 1116 shown in FIG.11) corresponding to a detected far-distance road surface. The time position of the return light pulse may be determined based on a weight center of the LiDAR detection data samples within the sliding time window associated with the maximum signal intensity I_max. As described above, the maximum signal intensity I_max represents the maximum integrated value of the subsets of data samples within the sliding time window at different time positions T1, T1+Δ*t,* T1+2*Δ*t,* T1+3***Δ*t*, and so forth. The time position of the maximum signal intensity I_max is also stored as previously described. As shown in FIG. 14, for return light pulse 1116, the peak of the pulse may be located at within a time window starting at time position T1+*m**Δ*t.* In other words, the integration of the subset of data samples within sliding time window 1102 starting at time position T1*+m**Δ*t* generates the maximum signal intensity among integrations of the subsets of data samples. The time position of light pulse 1116 can thus be represented by using the weight center of the subset of data samples within sliding time window 1102 at time position T1+*m**Δ*t.*

Referencing back to FIG. 13, in step 1304 of method 1300, the LiDAR system provides far-distance road surface detection results to a vehicle perception and planning system (e.g., system 220 shown in FIG. 2). The detection results may be in the form of multiple points in a point cloud. A point cloud is a set of data points in space and the points in a point cloud may represent a 3D shape of an object. Each point in the point cloud has position coordinates (e.g., X, Y, Z coordinates). In some embodiments, the LiDAR system also computes and provides distance/depth information of the points. For example, using the time position of a return light pulse (e.g., pulse 1116 shown in FIG.11) corresponding to a detected far-distance road surface, the distance or depth information of the road surface can be determined with the knowledge of the speed of light. In some embodiments, the LiDAR system may provide the time position of the return light pulse corresponding to the detected far-distance road surface directly to a vehicle perception and planning system. Based on the time position, the vehicle perception and planning system can determine the distance/depth of the detected far-distance road surface. For example, using the time position T1+*m**Δ*t* and the time position of the transmitted light pulse 1106, the round trip time of flight can be calculated and the distance of the detected far-distance road surface can in turn be determined.

Next, in step 1306 of method 1300, the LiDAR system and/or vehicle perception and planning system causes at least a part of perception of an environment associated with the vehicle to be generated based on the far-distance road surface detection results. As described above, the perception of the environment may be generated based on the point cloud provided by the LiDAR system, which includes the far-distance road surface detection results (e.g., the depth or distance information of the road surface). In some embodiments, the perception of the environment comprises at least one of a road shape detection or a road surface condition perception. The perceptions can be derived by the vehicle perception and planning system using the point cloud provided by the LiDAR system. The road shape perception comprises a perception of at least one of: an uphill road shape, a downhill road shape, a slope-varying road shape, a left winding road shape, and a right winding road shape. The road surface condition perception comprises a perception of at least one of: a dry road surface, a wet road surface, a flooded road surface, an icy road surface, an oily road surface, an obstructed road surface, and a changing of a road surface condition.

Next, in step 1308 of method 1300, the LiDAR system and/or the vehicle perception and planning system causes the vehicle control system to actuate a vehicle control mechanism based on the perception of the environment associated with the vehicle. For instance, based on the perception, the vehicle planning system plans the next movement of the vehicle. According to the planned movement, the vehicle control system then controls the vehicle to perform at least one of: speeding up, slowing down, turning left, turning right, turning at a pre-determined degree of angle, signaling, pulling to a side of the road, or gradually stopping the vehicle based on the perception of the environment associated with the vehicle. As an example, if a vehicle is moving at a high speed, it is essential to detect the condition of the far-distance road surface (e.g., at 60-150 meters) and control the vehicle accordingly. Typically, a vehicle travelling at a high speed only has a few seconds to react to the condition of the far-distance road surface. For example, at about 100 meters, the road may have a sharp curve and therefore, the LiDAR system needs to detect that curved road surface at that distance. Using the methods described above, the LiDAR system can detect the far-distance curved road surface and provide the detection data to the vehicle planning and control systems so that the vehicle is controlled to safely pass the curve (e.g., slow down, turn left/right, or the like).

In some embodiments, based on the far-distance road surface detection data, the LiDAR system and/or the vehicle perception and planning system cause the vehicle control system to dynamically adjust a region-of-interest (ROI) of the LiDAR system. Typically, the LiDAR system is configured to scan the region-of-interest (ROI) in a denser manner than other regions. For example, there may be more scan lines of an ROI than those of other regions. The region of interest may be, for example, the center front region of a vehicle or the direction of which the vehicle is heading towards. When the vehicle is driving at a high speed (e.g., on a freeway), the center front region located at about 60-150 meters away from the vehicle is important because the vehicle will approach the region in a few seconds. Thus, it may be beneficial to scan the region more densely than other regions. Based on the far-distance road detection data, the LiDAR system can dynamically adjust one or more components to increase the scanning density in such an ROI. For instance, the LiDAR system can increase the number of laser beams that are being directed to the ROI, reduce the scanning speed such that the ROI region has more scanning lines, increase the laser light power, or the like.

## Claims

1. A LiDAR system (704) configured to perform far-distance road surface detection, comprising:
one or more processors (610);
memory (630); and
one or more programs stored in the memory (630), the one or more programs including instructions for:
detecting a return light pulse corresponding to a transmitted light pulse generated by the LiDAR system;
determining, based on a signal intensity of the return light pulse being below an intensity threshold (928), wherein the intensity threshold (928) is configured to distinguish between return pulse signals of a near-distance road surface and noise, that a far-distance road surface detection should be used;
obtaining LiDAR detection data samples, the LiDAR detection data samples being associated with the return light pulse having the signal intensity below the intensity threshold (928);
determining, based on a sliding time window, a maximum signal intensity, I_max, associated with the LiDAR detection data samples, comprising:
selecting a time width of the sliding time window; and
iteratively integrating, based on a starting time position and an ending time position, a plurality of subsets of the LiDAR detection data samples having corresponding time positions within the selected time width of the sliding time window;
determining, based on I_max, being greater than a first intensity threshold, I1,
wherein I1 is configured to distinguish a return light pulse of a far-distance road surface from noise floor, that the LiDAR detection data samples correspond to a far-distance road surface detection; and
in accordance with a determination that the LiDAR detection data samples correspond to a far-distance road surface detection, providing far-distance road surface detection data for controlling movement of a vehicle.

2. The system of claim 1, wherein the one or more programs comprise further instructions for:
determining whether far-distance road surface detection should be used; and
if far-distance road surface detection should be used, using the far-distance road surface detection from a starting time position to an ending time position, wherein the starting time position and the ending time position are within a time interval between time positions associated with two consecutively transmitted light pulses.

3. The system of claim 1, wherein the one or more programs comprise further instructions for enabling the far-distance road surface detection based on a first threshold distance; and/or wherein the one or more programs comprise further instructions for disabling the far-distance road surface detection based on a maximum detectable distance of the LiDAR system.

4. The system of claim 1,
wherein iteratively integrating the plurality of subsets of the LiDAR detection data samples having corresponding time positions within the selected time width of the sliding time window comprises:
integrating a first subset of the LiDAR detection data samples having corresponding time positions within the time width of the sliding time window, the sliding time window being at the starting time position; and
iteratively performing:
moving the sliding time window to a next time position,
determining whether the next time position causes the sliding time window to exceed the ending time position,
if the next time position does not cause the sliding time window to exceed the ending time position, integrating a next subset of the LiDAR detection data samples having corresponding time positions within the sliding time window at the next time position.

5. The system of claim 1, wherein determining, based on the sliding time window, the maximum signal intensity associated with the LiDAR detection data samples further comprises:
determining I_max based on results of the iterative integration, from the starting time position to the ending time position, of the plurality of subsets of the LiDAR detection data samples having corresponding time positions within the time width of the sliding time window.

6. The system of any of claims 1-5, wherein determining, based on the maximum signal intensity, whether the LiDAR detection data samples correspond to a far-distance road surface detection comprises:
determining whether I_max is greater than I1; and
if the I_max is less than or equal to the I1, determining that the LiDAR detection data samples do not correspond to a far-distance road surface detection.

7. The system of claim 1, wherein the one or more programs include further instructions for:
in accordance with a determination that the LiDAR detection data samples correspond to a far-distance road surface detection, determining a time position of a return light pulse corresponding to a detected far-distance road surface, wherein determining the time position of the return light pulse corresponding to the detected far-distance road surface comprises:
computing the time position of the return light pulse corresponding to the detected far-distance road surface based on a weight center of the LiDAR detection data samples within the sliding time window associated with the maximum signal intensity.

8. The system of claim 1, wherein the one or more programs include further instructions for:
causing at least a part of a perception of an environment associated with the vehicle to be generated based on the far-distance road surface detection data; and
causing the vehicle control system to actuate a vehicle control mechanism based on the perception of the environment associated with the vehicle, wherein the perception of the environment comprises at least one of a road shape perception or a road surface condition perception, and wherein
the road shape perception comprises a perception of at least one of: an uphill road shape, a downhill road shape, a slope-varying road shape, a left winding road shape, and a right winding road shape, and wherein
the road surface condition perception comprises a perception of at least one of: a dry road surface, a wet road surface, a flooded road surface, an icy road surface, an oily road surface, an obstructed road surface, and a changing of a road surface condition.

9. The system of claim 8, wherein causing the vehicle control system to actuate the vehicle control mechanism based on the perception of the environment associated with the vehicle comprises:
causing the vehicle control system to control the vehicle to perform at least one of: speeding up, slowing down, turning left, turning right, turning at a pre-determined degree of angle, signaling, pulling to a side of the road, or gradually stopping the vehicle based on the perception of the environment associated with the vehicle; and
causing the vehicle control system to dynamically adjust a region of interest of the LiDAR system, wherein the LiDAR system is configured to scan the region of interest more densely than other regions.

10. A method for performing far-distance road detection using a LiDAR scanning system, comprising:
detecting a return light pulse corresponding to a transmitted light pulse generated by the LiDAR system;
determining, based on a signal intensity of the return light pulse being below an intensity threshold, wherein the intensity threshold (928) is configured to distinguish between return pulse signals of a near-distance road surface and noise, that a far-distance road surface detection should be used;
obtaining LiDAR detection data samples, the LiDAR detection data samples being associated with the return light pulse having the signal intensity below the intensity threshold (928);
determining, based on a sliding time window, a maximum signal intensity, I_max, associated with the LiDAR detection data samples, comprising:
selecting a time width of the sliding time window; and
iteratively integrating, based on a starting time position and an ending time position, a plurality of subsets of the LiDAR detection data samples having corresponding time positions within the selected time width of the sliding time window;
determining, based on I_max, being greater than a first intensity threshold, I1, wherein I1 is configured to distinguish a return light pulse of a far-distance road surface from noise floor, that the LiDAR detection data samples correspond to a far-distance road surface detection; and
in accordance with a determination that the LiDAR detection data samples correspond to a far-distance road surface detection, providing far-distance road surface detection data for controlling movement of a vehicle.

11. The method of claim 10, further comprising:
determining whether far-distance road surface detection should be used; and
if far-distance road surface detection should be used, using the far-distance road surface detection from a starting time position to an ending time position, wherein the starting time position and the ending time position are within a time interval between time positions associated with two consecutively transmitted light pulses.

12. The method of any of claim 10 or 11,
wherein iteratively integrating the plurality of subsets of the LiDAR detection data samples having corresponding time positions within the selected time width of the sliding time window comprises:
integrating a first subset of the LiDAR detection data samples having corresponding time positions within the time width of the sliding time window, the sliding time window being at the starting time position; and
iteratively performing:
moving the sliding time window to a next time position,
determining whether the next time position causes the sliding time window to exceed the ending time position,
if the next time position does not cause the sliding time window to exceed the ending time position, integrating a next subset of the LiDAR detection data samples having corresponding time positions within the sliding time window at the next time position.

13. The method of claim 12, wherein determining, based on the sliding time window, the maximum signal intensity associated with the LiDAR detection data samples further comprises:
determining the maximum signal intensity based on results of the iterative integration, from the starting time position to the ending time position, of the plurality of subsets of the LiDAR detection data samples having corresponding time positions within the time width of the sliding time window.

14. A non-transitory computer readable medium storing one or more programs, the one or more programs comprising instructions, which when executed by one or more processors of a LiDAR system according to any of claims 1-9, cause the electronic device to perform the method of any of claims 10 to 13.

15. A motor vehicle comprising the LiDAR system of any of claims 1-9.

## Patentansprüche

1. LiDAR-System (704), das zum Durchführen der Erkennung von weit entfernten Straßenoberflächen konfiguriert ist, umfassend:
einen oder mehrere Prozessoren (610);
einen Speicher (630); und
ein oder mehrere Programme, die in dem Speicher (630) gespeichert sind, wobei das eine oder die mehreren Programme Anweisungen für Folgendes beinhalten:
Erkennen eines Rückstreulichtimpulses, der einem von dem LiDAR-System ausgesendeten Lichtimpuls entspricht;
Bestimmen, dass eine Erkennung einer weit entfernten Straßenoberfläche zu verwenden ist, auf Basis einer unter einem Intensitätsschwellenwert (928) liegenden Signalintensität des Rückstreulichtimpulses, wobei der Intensitätsschwellenwert (928) zum Unterscheiden zwischen Rückstreusignalen einer Straßenoberfläche im Nahbereich und Rauschen konfiguriert ist;
Erhalten von LiDAR-Erkennungsdatenstichproben, wobei die LiDAR-Erkennungsdatenstichproben mit dem Rückstreulichtimpuls verbunden sind, der die unter dem Intensitätsschwellenwert (928) liegende Signalintensität aufweist;
Bestimmen, auf Basis eines Zeit-Schiebefensters, einer maximalen Signalintensität, I_max, die mit den LiDAR-Erkennungsdatenstichproben verbunden ist, umfassend:
Auswählen einer Zeitdauer des Zeit-Schiebefensters; und
iteratives Integrieren, auf Basis einer Anfangszeitposition und einer Endezeitposition, einer Mehrzahl von Teilmengen der LiDAR-Erkennungsdatenstichproben, die entsprechende Zeitpositionen innerhalb der ausgewählten Zeitdauer des Zeit-Schiebefensters aufweisen;
Bestimmen, dass die LiDAR-Erkennungsdatenstichproben einer Erkennung einer weit entfernten Straßenoberfläche entsprechen, auf Basis von I_max, die größer als ein erster Intensitätsschwellenwert, I1, ist, wobei I1 zum Unterscheiden eines Rückstreulichtimpulses einer weit entfernten Straßenoberfläche vom Grundrauschen konfiguriert ist; und
gemäß einer Bestimmung, dass die LiDAR-Erkennungsdatenstichproben einer Erkennung einer weit entfernten Straßenoberfläche entsprechen, Bereitstellen von Daten der Erkennung einer weit entfernten Straßenoberfläche zum Steuern der Bewegung eines Fahrzeugs.

2. System nach Anspruch 1, wobei das eine oder die mehreren Programme weitere Anweisungen umfassen zum:
Bestimmen, ob die Erkennung einer weit entfernten Straßenoberfläche zu verwenden ist; und,
falls die Erkennung einer weit entfernten Straßenoberfläche zu verwenden ist, Verwenden der Erkennung der weit entfernten Straßenoberfläche von einer Anfangszeitposition bis zu einer Endezeitposition, wobei die Anfangszeitposition und die Endezeitposition innerhalb eines Zeitintervalls zwischen Zeitpositionen, die mit zwei aufeinanderfolgend ausgesendeten Lichtimpulsen verbunden sind, liegen.

3. System nach Anspruch 1, wobei das eine oder die mehreren Programme weitere Anweisungen zum Ermöglichen der Erkennung einer weit entfernten Straßenoberfläche auf Basis einer ersten Schwellenentfernung umfassen; und/oder wobei das eine oder die mehreren Programme weitere Anweisungen zum Deaktivieren der Erkennung einer weit entfernten Straßenoberfläche auf Basis einer maximal erkennbaren Entfernung des LiDAR-Systems umfassen.

4. System nach Anspruch 1,
wobei iteratives Integrieren der Mehrzahl von Teilmengen der LiDAR-Erkennungsdatenstichproben, die entsprechende Zeitpositionen innerhalb der ausgewählten Zeitdauer des Zeit-Schiebefensters aufweisen, Folgendes umfasst:
Integrieren einer ersten Teilmenge der LiDAR-Erkennungsdatenstichproben, die entsprechende Zeitpositionen innerhalb der Zeitdauer des Zeit-Schiebefensters aufweisen, wobei das Zeit-Schiebefenster sich an der Anfangszeitposition befindet; und
iteratives Durchführen von:
Bewegen des Zeit-Schiebefensters zu einer nächsten Zeitposition,
Bestimmen, ob die nächste Zeitposition veranlasst, dass das Zeit-Schiebefenster die Endezeitposition überschreitet,
wenn die nächste Zeitposition nicht veranlasst, dass das Zeit-Schiebefenster die Endezeitposition überschreitet, Integrieren einer nächsten Teilmenge der LiDAR-Erkennungsdatenstichproben, die entsprechende Zeitpositionen innerhalb des Zeit-Schiebefensters aufweist, an der nächsten Zeitposition.

5. System nach Anspruch 1, wobei das Bestimmen, auf Basis des Zeit-Schiebefensters, der mit den LiDAR-Erkennungsdatenstichproben verbundenen maximalen Signalintensität ferner Folgendes umfasst:
Bestimmen von I_max auf Basis von Ergebnissen der iterativen Integration, von der Anfangszeitposition bis zur Endezeitposition, der Mehrzahl von Teilmengen der LiDAR-Erkennungsdatenstichproben, die entsprechende Zeitpositionen innerhalb der Zeitdauer des Zeit-Schiebefensters aufweisen.

6. System nach einem der Ansprüche 1 bis 5, wobei das Bestimmen, auf Basis der maximalen Signalintensität, ob die LiDAR-Erkennungsdatenstichproben einer Erkennung einer weit entfernten Straßenoberfläche entsprechen, Folgendes umfasst:
Bestimmen, ob I_max größer als I1 ist; und,
wenn I_max kleiner oder gleich I1 ist, Bestimmen, dass die LiDAR-Erkennungsdatenstichproben einer Erkennung einer weit entfernten Straßenoberfläche nicht entsprechen.

7. System nach Anspruch 1, wobei das eine oder die mehreren Programme weitere Anweisungen beinhalten für:
gemäß einer Bestimmung, dass die LiDAR-Erkennungsdatenstichproben einer Erkennung einer weit entfernten Straßenoberfläche entsprechen, Bestimmen einer Zeitposition eines Rückstreulichtimpulses, der einer erkannten weit entfernten Straßenoberfläche entspricht, wobei das Bestimmen der Zeitposition des Rückstreulichtimpulses, der der erkannten weit entfernten Straßenoberfläche entspricht, Folgendes umfasst:
Berechnen der Zeitposition des Rückstreulichtimpulses, der der erkannten weit entfernten Straßenoberfläche entspricht, auf Basis einer Gewichtsmitte der mit der maximalen Signalintensität verbundenen LiDAR-Erkennungsdatenstichproben innerhalb des Zeit-Schiebefensters.

8. System nach Anspruch 1, wobei das eine oder die mehreren Programme ferner Anweisungen beinhalten für:
Veranlassen der Erzeugung mindestens eines Teils einer Wahrnehmung einer mit dem Fahrzeug verbundenen Umgebung auf Basis der Daten der Erkennung einer weit entfernten Straßenoberfläche, und
Veranlassen, dass das Fahrzeugsteuerungssystem einen Fahrzeugsteuerungsmechanismus auf Basis der Wahrnehmung der mit dem Fahrzeug verbundenen Umgebung betätigt, wobei die Wahrnehmung der Umgebung mindestens eine von einer Straßenformwahrnehmung oder einer Straßenoberflächenzustandswahrnehmung umfasst und wobei
die Straßenformwahrnehmung eine Wahrnehmung von mindestens einer der folgenden umfasst: einer bergauf führenden Straßenform, einer bergab führenden Straßenform, einer Straßenform mit unterschiedlichen Steigungen, einer Linkskurvenstraßenform und einer Rechtskurvenstraßenform, und wobei
die Wahrnehmung des Straßenoberflächenzustands eine Wahrnehmung mindestens einer der folgenden umfasst: einer trockenen Straßenoberfläche, einer nassen Straßenoberfläche, einer überfluteten Straßenoberfläche, einer vereisten Straßenoberfläche, einer öligen Straßenoberfläche, einer versperrten Straßenoberfläche und einer Veränderung des Zustands der Straßenoberfläche.

9. System nach Anspruch 8, wobei das Veranlassen des Fahrzeugsteuerungssystems zum Betätigen des Fahrzeugsteuerungsmechanismus auf Basis der Wahrnehmung der mit dem Fahrzeug verbundenen Umgebung Folgendes umfasst:
Veranlassen des Fahrzeugsteuerungssystems zum Steuern des Fahrzeugs zum Durchführen von mindestens einem von: Beschleunigen, Verlangsamen, Linksabbiegen, Rechtsabbiegen, Abbiegen in einem vorbestimmten Winkel, Signalgeben, Fahren an einen Straßenrand oder allmähliches Anhalten des Fahrzeugs auf Basis der Wahrnehmung der mit dem Fahrzeug verbundenen Umgebung; und
Veranlassen des Fahrzeugsteuerungssystems, einen Bereich von Interesse des LiDAR-Systems dynamisch anzupassen, wobei das LiDAR-System zum dichteren Scannen des Bereichs von Interesse als andere Bereiche konfiguriert ist.

10. Verfahren zur Durchführung der Erkennung einer weit entfernten Straße unter Verwendung eines LiDAR-Scanning-Systems, umfassend:
Erkennen eines Rückstreulichtimpulses, der einem ausgesendeten Lichtimpuls entspricht, der von dem LiDAR-System erzeugt wird;
Bestimmen, dass eine Erkennung einer weit entfernten Straßenoberfläche zu verwenden ist, auf Basis einer unter einem Intensitätsschwellenwert liegenden Signalintensität des Rückstreulichtimpulses, wobei der Intensitätsschwellenwert (928) zum Unterscheiden zwischen Rückstreusignalen einer Straßenoberfläche im Nahbereich und Rauschen konfiguriert ist;
Erhalten von LiDAR-Erkennungsdatenstichproben, wobei die LiDAR-Erkennungsdatenstichproben mit dem Rückstreulichtimpuls verbunden sind, der die unter dem Intensitätsschwellenwert (928) liegende Signalintensität aufweist;
Bestimmen, auf Basis eines Zeit-Schiebefensters, einer maximalen Signalintensität, I_max, die mit den LiDAR-Erkennungsdatenstichproben verbunden ist, umfassend:
Auswählen einer Zeitdauer des Zeit-Schiebefensters; und
iteratives Integrieren, auf Basis einer Anfangszeitposition und einer Endezeitposition, einer Mehrzahl von Teilmengen der LiDAR-Erkennungsdatenstichproben, die entsprechende Zeitpositionen innerhalb der ausgewählten Zeitdauer des Zeit-Schiebefensters aufweisen;
Bestimmen, dass die LiDAR-Erkennungsdatenstichproben einer Erkennung einer weit entfernten Straßenoberfläche entsprechen, auf Basis von I_max, die größer als ein erster Intensitätsschwellenwert, I1, ist, wobei I1 zum Unterscheiden eines Rückstreulichtimpulses einer weit entfernten Straßenoberfläche vom Grundrauschen konfiguriert ist; und
gemäß einer Bestimmung, dass die LiDAR-Erkennungsdatenstichproben einer Erkennung einer weit entfernten Straßenoberfläche entsprechen, Bereitstellen von Daten der Erkennung einer weit entfernten Straßenoberfläche zum Steuern der Bewegung eines Fahrzeugs.

11. Verfahren nach Anspruch 10, ferner umfassend:
Bestimmen, ob die Erkennung einer weit entfernten Straßenoberfläche zu verwenden ist; und,
wenn die Erkennung einer weit entfernten Straßenoberfläche zu verwenden ist, Verwenden der Erkennung der weit entfernten Straßenoberfläche von einer Anfangszeitposition bis zu einer Endezeitposition, wobei die Anfangszeitposition und die Endezeitposition innerhalb eines Zeitintervalls zwischen Zeitpositionen, die mit zwei aufeinanderfolgend ausgesendeten Lichtimpulsen verbunden sind, liegen.

12. Verfahren nach Anspruch 10 oder 11,
wobei iteratives Integrieren der Mehrzahl von Teilmengen der LiDAR-Erkennungsdatenstichproben, die entsprechende Zeitpositionen innerhalb der ausgewählten Zeitdauer des Zeit-Schiebefensters aufweisen, Folgendes umfasst:
Integrieren einer ersten Teilmenge der LiDAR-Erkennungsdatenstichproben, die entsprechende Zeitpositionen innerhalb der Zeitdauer des Zeit-Schiebefensters aufweisen, wobei das Zeit-Schiebefenster sich an der Anfangszeitposition befindet; und
iteratives Durchführen von:
Bewegen des Zeit-Schiebefensters zu einer nächsten Zeitposition,
Bestimmen, ob die nächste Zeitposition veranlasst, dass das Zeit-Schiebefenster die Endezeitposition überschreitet,
wenn die nächste Zeitposition nicht veranlasst, dass das Zeit-Schiebefenster die Endezeitposition überschreitet, Integrieren einer nächsten Teilmenge der LiDAR-Erkennungsdatenstichproben, die entsprechende Zeitpositionen innerhalb des Zeit-Schiebefensters aufweist, an der nächsten Zeitposition.

13. Verfahren nach Anspruch 12, wobei das Bestimmen, auf Basis des Zeit-Schiebefensters, der mit den LiDAR-Erkennungsdatenstichproben verbundenen maximalen Signalintensität Folgendes umfasst:
Bestimmen der maximalen Signalintensität auf Basis von Ergebnissen der iterativen Integration, von der Anfangszeitposition bis zur Endezeitposition, der Mehrzahl von Teilmengen der LiDAR-Erkennungsdatenstichproben, die entsprechende Zeitpositionen innerhalb der Zeitdauer des Zeit-Schiebefensters aufweisen.

14. Nichtflüchtiges computerlesbares Speichermedium, das ein oder mehrere Programme speichert, wobei das eine oder die mehreren Programme Anweisungen umfassen, die bei Ausführung durch einen oder mehrere Prozessoren eines LiDAR-Systems nach einem der Ansprüche 1 bis 9 die elektronische Einrichtung zum Durchführen des Verfahrens nach einem der Ansprüche 10 bis 13 veranlassen.

15. Kraftfahrzeug, das das LiDAR-System nach einem der Ansprüche 1 bis 9 umfasst.

## Revendications

1. Système LiDAR (704) configuré pour réaliser une détection de chaussée lointaine, comprenant :
un ou plusieurs processeurs (610) ;
une mémoire (630) ; et
un ou plusieurs programmes stockés dans la mémoire (630), les un ou plusieurs programmes comportant des instructions pour :
détecter une impulsion lumineuse de retour correspondant à une impulsion lumineuse émise générée par le système LiDAR ;
déterminer, lorsque qu'une intensité de signal de l'impulsion lumineuse de retour est inférieure à un seuil d'intensité (928), le seuil d'intensité (928) étant configuré pour distinguer entre des signaux d'impulsion de retour d'une chaussée proche et le bruit, qu'une détection de chaussée lointaine devrait être utilisée ;
obtenir des échantillons de données de détection LiDAR, les échantillons de données de détection LiDAR étant associés à l'impulsion lumineuse de retour dont l'intensité de signal est inférieure au seuil d'intensité (928) ;
déterminer, sur la base d'une fenêtre temporelle glissante, une intensité de signal maximale, I_max, associée aux échantillons de données de détection LiDAR, comprenant :
la sélection d'une largeur de temps de la fenêtre temporelle glissante ; et
l'intégration itérative, sur la base d'une position temporelle de début et d'une position temporelle de fin, d'une pluralité de sous-ensembles des échantillons de données de détection LiDAR ayant des positions temporelles correspondantes dans la largeur de temps sélectionnée de la fenêtre temporelle glissante ;
la détermination, lorsque I_max est supérieure à un seuil d'intensité initial, I1, I1 étant configuré pour distinguer entre une impulsion lumineuse de retour d'une chaussée lointaine et un plancher de bruit, que les échantillons de données de détection LiDAR correspondent à une détection de chaussée lointaine ; et
conformément à une détermination que les échantillons de données de détection LiDAR correspondent à une détection de chaussée lointaine, la fourniture de données de détection de chaussée lointaine pour commander le mouvement d'un véhicule.

2. Système selon la revendication 1, dans lequel les un ou plusieurs programmes comprennent des instructions supplémentaires pour :
déterminer que la détection de chaussée lointaine devrait être utilisée ; et
si la détection de chaussée lointaine doit être utilisée, l'utilisation de la détection de chaussée lointaine depuis une position temporelle de début jusqu'à une position temporelle de fin, dans lequel la position temporelle de début et la position temporelle de fin se trouvent dans un intervalle de temps entre des positions temporelles associées à deux impulsions lumineuses émises consécutivement.

3. Système selon la revendication 1, dans lequel les un ou plusieurs programmes comprennent des instructions supplémentaires pour activer la détection de chaussée lointaine sur la base d'une première distance seuil ; et/ou dans lequel les un ou plusieurs programmes comprennent des instructions supplémentaires pour désactiver la détection de chaussée lointaine sur la base d'une distance détectable maximale du système LiDAR.

4. Système selon la revendication 1,
dans lequel l'intégration itérative de la pluralité de sous-ensembles des échantillons de données de détection LiDAR ayant des positions temporelles correspondantes dans la largeur de temps sélectionnée de la fenêtre temporelle glissante comprend :
l'intégration d'un premier sous-ensemble des échantillons de données de détection LiDAR ayant des positions temporelles correspondantes dans la largeur de temps de la fenêtre temporelle glissante, la fenêtre temporelle glissante étant à la position temporelle de début ; et
la réalisation itérative :
d'un déplacement de la fenêtre temporelle glissante jusqu'à une position temporelle suivante,
d'une détermination que la position temporelle suivante amène la fenêtre temporelle glissante à dépasser la position temporelle de fin,
si la position temporelle suivante n'amène pas la fenêtre temporelle glissante à dépasser la position temporelle de fin, d'une intégration d'un sous-ensemble suivant des échantillons de données de détection LiDAR ayant des positions temporelles correspondantes dans la fenêtre temporelle glissante à la position suivante.

5. Système selon la revendication 1, dans lequel la détermination, sur la base de la fenêtre temporelle glissante, de l'intensité de signal maximale associée aux échantillons de données de détection LiDAR comprend en outre :
la détermination de I_max sur la base de résultats de l'intégration itérative, depuis la position temporelle de début jusqu'à la position temporelle de fin, de la pluralité de sous-ensembles des échantillons de données de détection LiDAR ayant des positions temporelles correspondantes dans la largeur de temps de la fenêtre temporelle glissante.

6. Système selon l'une quelconque des revendications 1 à 5, dans lequel la détermination, sur la base de l'intensité de signal maximale, que les échantillons de données de détection LiDAR correspondent ou non à une détection de chaussée lointaine, comprend :
la détermination que I_max est supérieure ou non à I1 , et
si l'I_max est inférieure ou égale à l'I1, la détermination que les échantillons de données de détection LiDAR ne correspondent pas à une détection de chaussée lointaine.

7. Système selon la revendication 1, dans lequel les un ou plusieurs programmes comportent des instructions supplémentaires pour :
conformément à une détermination que les échantillons de données de détection LiDAR correspondent à une détection de chaussée lointaine, déterminer une position temporelle d'une impulsion lumineuse de retour correspondant à une chaussée lointaine détectée, dans lequel la détermination de la position temporelle de l'impulsion lumineuse de retour correspondant à la surface de route lointaine détectée comprend :
le calcul de la position temporelle de l'impulsion lumineuse de retour correspondant à la chaussée lointaine détectée sur la base d'un centre pondéral des échantillons de données de détection LiDAR dans la fenêtre temporelle glissante associée à l'intensité de signal maximale.

8. Système selon la revendication 1, dans lequel les un ou plusieurs programmes comportent des instructions supplémentaires pour :
faire en sorte qu'au moins une partie d'une perception d'un environnement associé au véhicule soit généré sur la base des données de détection de chaussée lointaine ; et
faire en sorte que le système de commande de véhicule actionne un mécanisme de commande de véhicule sur la base de la perception de l'environnement associé au véhicule, dans lequel la perception de l'environnement comprend au moins une perception de forme de route et/ou une perception d'état de chaussée, et dans lequel
la perception de forme de route comprend une perception d'au moins l'une des formes suivantes : une forme de route montante, une forme de route descendante, une forme de route à pente variable, une forme de route tournant vers la gauche, une forme de route tournant vers la droite, et dans lequel
la perception d'état de chaussée comprend la perception d'au moins l'un des états suivants : une chaussée sèche, une chaussée humide, une chaussée inondée, une chaussée glacée, une chaussée huileuse, une chaussée obstruée et un changement d'un état de chaussée.

9. Système selon la revendication 8, dans lequel l'action d'amener le système de commande de véhicule à activer le mécanisme de commande de véhicule sur la base de la perception de l'environnement associé au véhicule, comprend :
l'action d'amener le système de commande de véhicule à réaliser au moins l'une des opérations suivantes : accélérer, ralentir, tourner à gauche, tourner à droite, tourner à un angle prédéterminé, signaler, se mettre sur le côté de la route, ou arrêter progressivement le véhicule sur la base de la perception de l'environnement associé au véhicule ; et
l'action d'amener le système de commande de véhicule à ajuster dynamiquement une région d'intérêt du système LiDAR, dans lequel le système LiDAR est configuré pour balayer la région d'intérêt de manière plus dense que d'autres régions.

10. Procédé de réalisation d'une détection de route lointaine à l'aide d'un système de balayage LiDAR, comprenant :
la détection d'une impulsion lumineuse de retour correspondant à une impulsion lumineuse émise générée par le système LiDAR ;
la détermination, lorsqu'une intensité de signal de l'impulsion de retour est inférieure à un seuil d'intensité, le seuil d'intensité (928) étant configuré pour distinguer entre des signaux d'impulsion de retour d'une chaussée proche et le bruit, qu'une détection de chaussée lointaine devrait être utilisée ;
l'obtention d'échantillons de données de détection LiDAR, les échantillons de données de détection LiDAR étant associés à l'impulsion lumineuse de retour dont l'intensité de signal est inférieure au seuil d'intensité (928) ;
la détermination, sur la base d'une fenêtre temporelle glissante, d'une intensité de signal maximale, I_max, associée aux échantillons de données de détection LiDAR, comprenant :
la sélection d'une largeur de temps de la fenêtre temporelle glissante ; et
l'intégration itérative, sur la base d'une position temporelle de début et d'une position temporelle de fin, d'une pluralité de sous-ensembles des échantillons de données de détection LiDAR ayant des positions temporelles correspondantes dans la largeur de temps sélectionnée de la fenêtre temporelle glissante ;
la détermination, lorsque I_max est supérieure à un seuil d'intensité initial, I1, I1 étant configuré pour distinguer entre une impulsion lumineuse de retour d'une chaussée lointaine et un plancher de bruit, que les échantillons de données de détection LiDAR correspondent à une détection de chaussée lointaine ; et
conformément à une détermination que les échantillons de données de détection LiDAR correspondent à une détection de chaussée lointaine, la fourniture de données de détection de chaussée lointaine pour commander un mouvement d'un véhicule.

11. Procédé selon la revendication 10, comprenant en outre :
la détermination qu'une détection de chaussée lointaine devrait être utilisée ; et
si la détection de chaussée lointaine doit être utilisée, l'utilisation de la détection de chaussée lointaine depuis une position temporelle de début jusqu'à une position temporelle de fin, dans lequel la position temporelle de début et la position temporelle de fin se trouvent dans un intervalle de temps entre des positions temporelles associées à deux impulsions lumineuses émises consécutivement.

12. Procédé selon l'une quelconque des revendications 10 ou 11,
dans lequel l'intégration itérative de la pluralité de sous-ensembles des échantillons de données de détection LiDAR ayant des positions temporelles correspondantes dans la largeur de temps sélectionnée de la fenêtre temporelle glissante comprend :
l'intégration d'un premier sous-ensemble des échantillons de données de détection LiDAR ayant des positions temporelles correspondantes dans la largeur de temps de la fenêtre temporelle glissante, la fenêtre temporelle glissante étant à la position temporelle de début, et
la réalisation itérative :
d'un déplacement de la fenêtre temporelle glissante jusqu'à une position suivante,
d'une détermination que la position temporelle suivante amène la fenêtre temporelle glissante à dépasser la position temporelle de fin,
si la position temporelle suivante n'amène pas la fenêtre temporelle glissante à dépasser la position temporelle de fin, d'une intégration d'un sous-ensemble suivant des échantillons de données de détection LiDAR ayant des positions temporelles correspondantes dans la fenêtre temporelle glissante à la position temporelle suivante.

13. Procédé selon la revendication 12, dans lequel la détermination, sur la base de la fenêtre temporelle glissante, de l'intensité de signal maximale associée aux échantillons de données de détection LiDAR, comprend en outre:
la détermination de l'intensité de signal maximale sur la base de résultats de l'intégration itérative, depuis la position temporelle de début jusqu'à la position temporelle de fin, de la pluralité de sous-ensembles des échantillons de données de détection LiDAR ayant des positions temporelles correspondantes dans la largeur de temps de la fenêtre temporelle glissante.

14. Support non transitoire lisible par ordinateur stockant un ou plusieurs programmes, les un ou plusieurs programmes comprenant des instructions, qui, une fois exécutées par un ou plusieurs processeurs d'un système LiDAR selon l'une quelconque des revendications 1 à 9, amènent le dispositif électronique à réaliser le procédé selon l'une quelconque des revendications 10 à 13.

15. Véhicule à moteur comprenant le système LiDAR selon l'une quelconque des revendications 1 à 9.
